# FASCICULE DE BREVET EUROPEEN

(11) **EP 1 080 368 B1**
(45) Date de publication et mention de la délivrance du brevet: **04.05.2005**
(21) Numéro de dépôt: 99920903.4
(22) Date de dépôt: 21.05.1999
(51) Int. Cl.: G01N 33/543, G01N 33/547, C12N 11/06, C07F 15/04, C08G 61/02

(54) **BATON MOLECULAIRE ET SES APPLICATIONS**
MOLEKULARES STÄBCHEN UND DESSEN ANWENDUNGEN
MOLECULAR ROD AND USES

(30) Priorité: 25.05.1998 FR 9806540
(43) Date de publication de la demande: 07.03.2001
(73) Titulaire: COMMISSARIAT A L'ENERGIE ATOMIQUE, 75015 Paris Cédex 15 (FR); CENTRE NATIONAL DE LA RECHERCHE SCIENTIFIQUE, 75016 Paris Cédex (FR)
(72) Inventeur: BALAVOINE, Fabrice, F-75015 Paris (FR); MIOSKOWSKI, Charles, F-67200 Strasbourg (FR); SCHULTZ, Patrick, F-67640 Fegersheim (FR)
(74) Mandataire: Vialle-Presles, Marie José
(86) Numéro de dépôt international: PCT/FR1999/001207
(87) Numéro de publication internationale: WO 1999/061912

(56) Documents cités:
- KUBALEK EW, LE GRICE SFJ, BROWN PO: "Two-dimensional crystallization of histidine-tgged, HIV-1 reverse trascriptase promoted by a novel nickel-chelating lipid" JOURNAL OF STRUCTURAL BIOLOGY, vol. 113, no. 2, septembre 1994 (1994-09) - octobre 1994 (1994-10), pages 117-123, XP002096865 cité dans la demande
- JAP BK, ZULAUF M, SCHEYBANI T, HEFTI A, BAUMEISTER W, AEBI U: "2D crystallization: from art to science" ULTRAMICROSCOPY, vol. 46, 1992, pages 45-84, XP002096893 cité dans la demande
- MORONI M ET AL: "RIGID ROD CONJUGATED POLYMERS FOR NONLINEAR OPTICS. 1 CHARACTERIZATION AND LINEAR OPTICAL PROPERTIES OF POLY(ARYLENEETHYNYLENE) DERIVATIVES" MACROMOLECULES, vol. 27, 1994, pages 562-571, XP000650214 cité dans la demande
- SWAGER TM, GIL CJ, WRIGHTON MS: "Fluorescence studies of poly(p-phenyleneethylene)s: the effect of anthracene substitution" JOURNAL OF PHYSICAL CHEMISTRY, vol. 99, no. 13, 30 mars 1995 (1995-03-30), pages 4886-4893, XP002096899 cité dans la demande

## Description

La présente invention est relative à des bâtons moléculaires, à leurs utilisations dans un procédé de fixation et/ou de cristallisation de macromolécules, aux produits ainsi obtenus ainsi qu'aux applications desdits produits dans le domaine des matériaux et de la biologie structurale, notamment comme biocapteurs ou comme biomatériaux.

La connaissance de la structure des protéines et notamment de leurs sites actifs est essentielle à la compréhension de leur mécanisme d'action. On dispose, pour réaliser de telles études, de plusieurs méthodes : rayons X, RMN, électrocristallographie (cristallisation 2D).

Pour réaliser la cristallisation proprement dite, la technique de cristallisation bidimensionnelle sur monocouche ou film lipidique, à l'interface air/eau (E.E. Ugziris et al., *Nature*, 1983, 301, 125-129), permet la formation de systèmes auto-organisés de macromolécules biologiques (cristaux) et la détermination des structures de ces molécules par l'analyse par microscopie électronique des cristaux obtenus.

Cette méthode consiste à créer une monocouche lipidique au niveau d'une interface air/liquide, les lipides étant sélectionnés pour interagir avec les protéines, présentes dans la phase liquide, qui se fixent sur les lipides, puis forment un réseau organisé.

La fixation des protéines sur les lipides de la monocouche met en jeu des interactions chimiques au niveau de la tête polaire des lipides. Ces interactions sont soit aspécifiques, les lipides possédant des extrémités polaires chargées, donnant lieu à une cristallisation par interactions ioniques, soit spécifiques. Dans ce dernier cas, la tête polaire des lipides porte des ligands présentant une forte affinité avec les protéines à fixer.

En particulier, il a pu être montré que des protéines solubles peuvent cristalliser bidimensionnellement sur des films lipidiques chargés, ou fonctionnalisés par un ligand de la protéine étudiée (B.J. Jap et al., Ultramicroscopy, 1992, 46, 45-84).

Plus récemment, des lipides fonctionnalisés par des complexes métalliques tels que des complexes de nickel (E.W. Kubalek et al., J. Struct. Biol., 1994, 113, 117-123) ont permis de cristalliser des protéines de fusion dites étiquetées histidine. Ces protéines possèdent en effet, à leur extrémité N- ou C-terminale, une séquence composée de plusieurs histidines. Il a pu être montré que la fixation de telles protéines sur un lipide-nickel était due à une interaction forte entre le complexe nickel et la séquence poly-histidine (C. Vénien-Brian et al., J. Mol. Biol., 1997, 274, 687-692). De tels lipides fonctionnalisés ont permis d'obtenir une cristallisation, notamment dans les cas où l'on ne disposait pas du ligand approprié.

Toutefois, la cristallisation des protéines sur des films lipidiques présente l'inconvénient d'être relativement aléatoire et de dépendre de nombreux facteurs, qu'il est difficile de maîtriser simultanément :
- le ligand porté par les lipides doit être suffisamment accessible, pour pouvoir interagir avec les protéines. Cette accessibilité dépend de la longueur du bras espaceur entre le lipide et le ligand : trop court, il donne lieu à une pénétration de la protéine à l'intérieur de la couche lipidique ; trop long, il confère un trop grand degré de liberté à la protéine liée et augmente l'incidence des défauts dans le cristal ;
- la monocouche lipidique doit être suffisamment fluide pour conférer une mobilité latérale et rotationnelle suffisante à la protéine liée, permettant ainsi aux protéines de s'organiser les unes par rapport aux autres et de développer des contacts intermoléculaires, de façon à donner naissance au cristal ;
- une autre difficulté, inhérente à la cristallisation sur monocouche lipidique concerne la stabilité de la monocouche ; en effet, la stabilité de l'interface air/liquide est difficilement contrôlable. En outre, la monocouche lipidique doit rester stable, non seulement avant la fixation des protéines, mais aussi après leur fixation, pour permettre l'organisation spatiale des protéines ;
- pour l'étude microscopique, qui suit l'étape de cristallisation, il est nécessaire de réaliser une multitude de plans, du fait de la nature plane de la structure obtenue.

En conséquence, les Inventeurs se sont donné pour but de pourvoir à des structures, dénommées ci-après bâtons moléculaires, adaptées à la fixation et à la cristallisation en solution de macromolécules biologiques ainsi qu'à un procédé permettant de fixer en solution et éventuellement d'induire une auto-organisation desdites macromolécules biologiques, qui réponde mieux aux besoins de la pratique que les méthodes de cristallisation 2D antérieurement utilisées.

La présente invention a pour objet des bâtons moléculaires, caractérisés en ce qu'ils présentent une structure représentée par la formule générale I suivante : 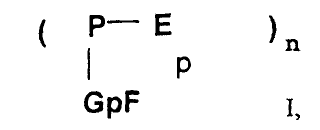 dans laquelle :
**P** représente un polymère sélectionné dans le groupe constitué par les polyphénylènes, les polyphénylènevinylènes, les polyphénylèneéthynylènes et les poly-vinylènes, tels qu'illustrés dans les formules ci-après : 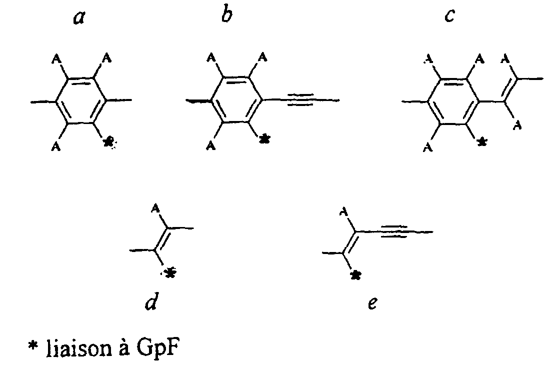
dans lesquelles :
A représente un atome hydrogène ou l'un des groupes suivants : alkyle, OH, O-alkyle, NH₂, NH-alkyle, CO₂H, CO₂-alkyle, CONH₂, CONH-alkyle,
**GpF** (groupe fonctionnel) représente un groupe B-R, dans lequel :
   - B (bras de liaison) est sélectionné parmi des chaînons carbonés en C₁-C₁₀, éventuellement substitués par des groupes alkyles, présentant ou non des insaturations ou des motifs poly-oxyéthylène pouvant présenter ou non en milieu de chaîne des groupes phosphate, tels que : 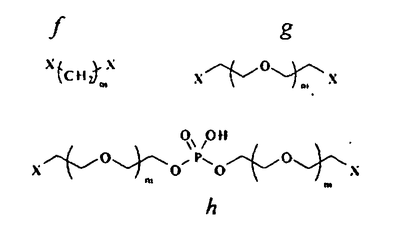
dans lesquels :
m représente un nombre entier de 1 à 10,
X représente O, NHCO, OCO, COO, CONH, S, CH₂ ou NH et constitue aux extrémités desdits chaînons carbonés des fonctions organiques d'accrochage du type esters, amides, éthers, thioéthers ;
   - R représente un groupe hydrophile, sélectionné parmi les groupes chargés positivement ou négativement ; des ligands ou analogues de macromolécules biologiques, tels que de manière non limitative, la biotine, la novobiocine, l'acide rétinoïque, les stéroïdes, des antigènes ; des complexes organométalliques interagissant avec des acides aminés ou des acides nucléiques, tels que les complexes de cuivre, de zinc, de nickel, de cobalt, de chrome, de platine, de palladium, de fer, de ruthénium ou d'osmium avec des ligands comme IDA, NTA, EDTA, bipyridine ou terpyridine, lesdits ligands étant éventuellement fonctionnalisés par des groupements alkyles de liaison à E (au niveau de X) ; on entend par groupes chargés positivement ou négativement et ce de manière non limitative : ammoniums, carboxylates, phosphates, sulfonates ; on peut citer par exemple les groupes suivants : -N(CH₃)₃⁺ ou -CO₂⁻.
**n** représente un nombre entier compris entre 5 et 1000,
**p** représente un nombre entier compris entre 0 et 10 et
**E** (segment espaceur) représente un motif chimique dont la nature ne perturbe pas la structure rigide du squelette formé par P et représente un motif phénylène, éthynylène, vinylène ou la combinaison de ces motifs, telle que phénylèneéthynylène, comme illustré dans la formule ci-après : 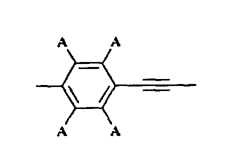
dans laquelle A représente un atome d'hydrogène ou l'un des groupes suivants : alkyle, OH, O-alkyle, NH₂, NH-alkyle, CO₂H, CO₂-alkyle, CONH₂, CONH-alkyle.

Les différents P tels que définis ci-dessus forment avec GpF et E, les formules suivantes :

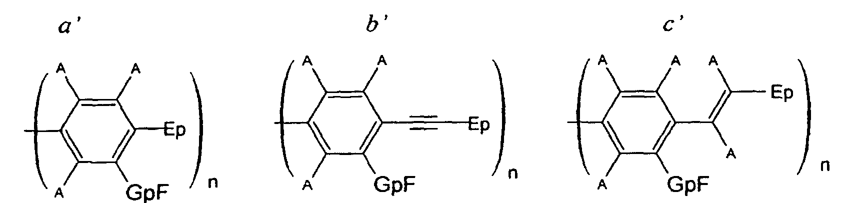

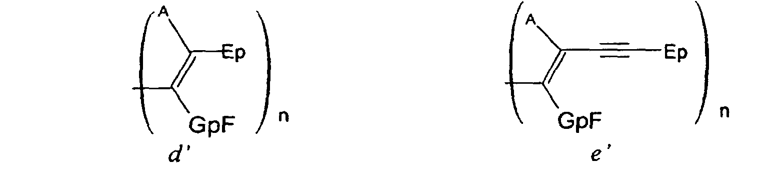

On entend au sens de la présente invention par alkyle : des groupements alkyles en C₁-C₆, linéaires ou ramifiés ou éventuellement substitués.

Les substituants des chaînons carbonés en C₁-C₁₀, représentant B sont notamment sélectionnés parmi les alkyles en C₁-C₆.

Des polymères dont le squelette présente un grand nombre de conjugaisons (poly-phénylène ; poly-phénylènevinylène ; poly-phénylèneéthynylène) ont déjà été décrits (*Angew. Chem. Int. Ed*. **1998,** vol.37, pp. 402-428) et sont utilisés pour leur propriétés électroniques et de fluorescence, en optique non-linéaire (*Macromolecules,* 1994, **27**, 562-571 et *J. Phys. Chem.,* 1995, **99**, 4886-4893).

Les polymères selon la présente invention sont fonctionnalisés par des groupes GpF, qui en association avec l'élément E confèrent au bâton moléculaire selon l'invention, des propriétés particulières :
- il est linéaire, rigide et soluble dans les milieux aqueux,
- il est régulièrement fonctionnalisé par des groupements ayant une très forte affinité pour les macromolécules biologiques et
- il est particulièrement bien adapté, lorsqu'il est mis en solution avec une macromolécule biologique, à la fixation et/ou à l'auto-organisation desdites macromolécules sur ledit bâton par reconnaissance moléculaire.

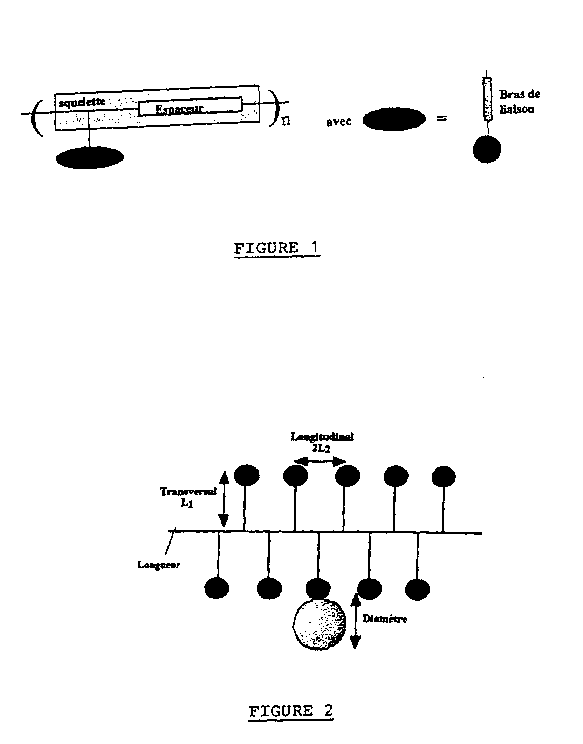

La structure des bâtons moléculaires, conformes à l'invention, est illustrée à la figure 1 :
P constitue un squelette de polymère, qui doit être rigide et globalement linéaire, afin d'avoir un caractère de bâton moléculaire ;
E permet de contrôler la distance L2 entre les groupes fonctionnels GpF, alors que le bras de liaison B de GpF permet de contrôler la distance L1 entre le groupe R et l'axe du polymère, comme illustré à la figure 2.

Selon un mode de réalisation avantageux desdits bâtons moléculaires, ils présentent la formule générale II suivante : 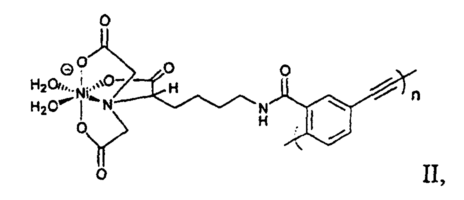 dans laquelle :
p=0 : absence de E,
P représente le groupe *b* tel que défini ci-dessus,
GpF comprend un groupe B représenté par un groupe *f* tel que défini ci-dessus, dans lequel m=3, l'un des X représente NHCO et l'autre X représente CH₂, et un groupe R représenté par un complexe organométallique à base de nickel (complexe Ni-NTA) et
n représente un nombre entier compris entre 5 et 1000.

Selon un autre mode de réalisation avantageux desdits bâtons moléculaires, ils présentent la formule générale III suivante : 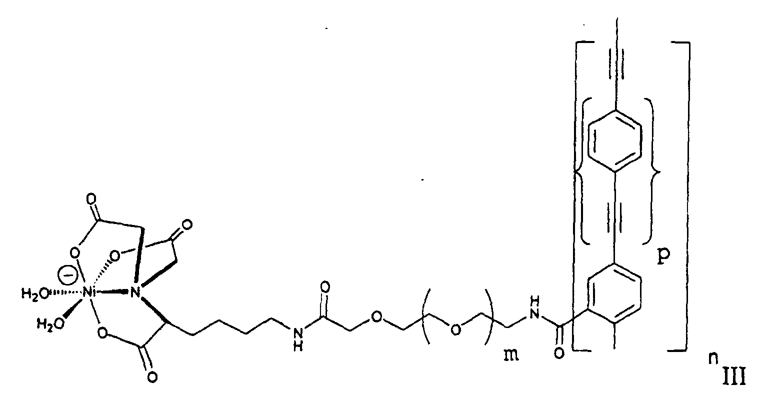 dans laquelle :
m représente un nombre entier compris entre 1 et 10
p représente un nombre entier compris entre 0 et 10,
P représente le groupe *b* tel que défini ci-dessus,
GpF comprend un groupe B représenté par un groupe *h* tel que défini ci-dessus, dans lequel les deux X sont identiques et représentent NHCO, associé à un groupe R représenté par un complexe organométallique à base de nickel (complexe Ni-NTA), dont le ligand NTA est fonctionnalisé par un groupe alkyle en C₄=(CH₂)₄, et
n représente un nombre entier compris entre 5 et 1000.

La présente invention a également pour objet un procédé de fixation et/ou d'auto-organisation de macromolécules biologiques, caractérisé en ce qu'il comprend essentiellement l'incubation, pendant au moins 15 minutes, d'une macromolécule biologique en solution avec un bâton moléculaire, tel que défini ci-dessus, dans des conditions de température et de pH convenables.

Après fixation et/ou auto-organisation des macromolécules, on obtient un objet supramoléculaire.

Dans le processus d'auto-organisation selon l'invention, l'objet supramoléculaire obtenu va éventuellement pouvoir évoluer vers un cristal hélicoïdal de macromolécules biologiques autour du bâton moléculaire.

Un tel procédé est particulièrement bien adapté au contrôle de la cristallisation hélicoïdale des macromolécules biologiques autour desdits bâtons moléculaires.

De manière surprenante, les bâtons moléculaires selon l'invention permettant de fixer en solution et éventuellement d'induire une auto-organisation de macromolécules biologiques, offrent d'importantes applications dans les domaines des nanomateriaux ou de la biologie structurale :
- fixation de macromolécules biologiques sur les bâtons moléculaires en contrôlant ou non l'orientation de cette fixation ;
- contrôle de la cristallisation hélicoïdale des macromolécules biologiques autour des bâtons moléculaires ;
- étude structurale des macromolécules biologiques par analyse avec un microscope électronique des cristaux hélicoïdaux obtenus.

Selon un mode de mise en oeuvre avantageux dudit procédé, lesdites macromolécules biologiques sont notamment des protéines solubles, membranaires, trans-membranaires, des enzymes, des anticorps, des fragments d'anticorps ou des acides nucléiques.

Selon un autre mode de mise en oeuvre dudit procédé, ladite solution est constituée d'un solvant de solubilisation desdites macromolécules biologiques, aqueux ou hydroalcoolique et contenant éventuellement au moins un détergent, en fonction de la macromolécule biologique à cristalliser.

Selon un autre mode de mise en oeuvre avantageux dudit procédé, les conditions d'incubation sont de préférence les suivantes : incubation à température ambiante, pendant 15 minutes à 48 heures, à un pH compris entre 5,5 et 8,5.

Le procédé selon la présente invention s'applique particulièrement à la détermination de structure tridimensionnelle de protéines solubles.

La formation d'un cristal hélicoïdal d'une macromolécule biologique comme une protéine sur un bâton moléculaire est le résultat d'un parfait accord entre les dimensions de la macromolécule (diamètre) et les paramètres du bâton (distances L1 et L2, et longueur du bâton moléculaire). La distance L1 représente la distance entre le groupe R et l'axe du polymère. La distance L2 représente la distance entre deux groupes R. La longueur du bâton moléculaire est équivalente au degré de polymérisation du polymère (voir figure 2).

De manière surprenante, ledit procédé permet d'obtenir des arrangements de macromolécules biologiques permettant des études structurales par microscopie électronique ou bien la préparation de nouveaux nano-matériaux utilisables pour leur propriétés physiques, électriques, ou biologiques.

La présente invention inclut par conséquent la préparation d'une librairie de bâtons moléculaires dans lesquels les distances L1 et L2 sont variables.

La présente invention a également pour objet un objet supramoléculaire, caractérisé en ce qu'il est constitué d'un bâton moléculaire, tel que défini ci-dessus, sur lequel des macromolécules biologiques sont fixées de manière non-covalente ou sont organisées sous une forme cristalline.

La présente invention a, en outre, pour objet les applications dudit objet supramoléculaire, à l'étude structurale des macromolécules qui lui sont associées, en tant que réactif biologique et notamment en tant que réactif immunologique et en tant que biocapteurs ou bioconducteurs.

Outre les dispositions qui précèdent, l'invention comprend encore d'autres dispositions, qui ressortiront de la description qui va suivre, qui se réfère à des exemples de mise en oeuvre du procédé objet de la présente invention ainsi qu'aux dessins annexés, dans lesquels :
- la figure 1 représente un schéma descriptif d'un élément d'un bâton moléculaire selon l'invention ;
- la figure 2 illustre un bâton moléculaire selon l'invention ;

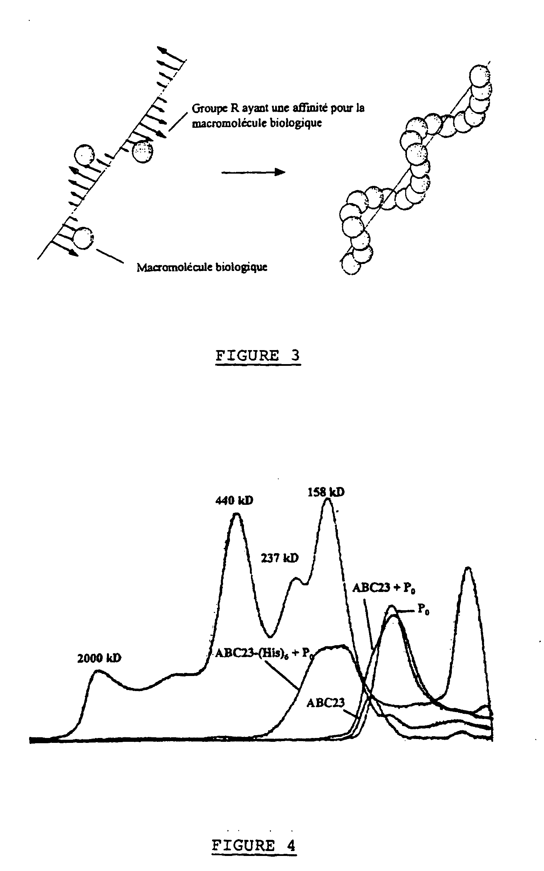

- la figure 3 représente un schéma descriptif de formation d'un cristal hélicoïdal de macromolécules biologiques sur un bâton moléculaire ;
- la figure 4 illustre l'étude de la fixation de l'ABC23-(His)₆ de l'ARN Polymérase de levure sur un bâton moléculaire selon l'invention, par chromatographie de perméation sur une colonne Superose® 6, avec élution par un tampon Tris (10mM, pH 8 ; NaCl 150 mM) (Smart® system) ;

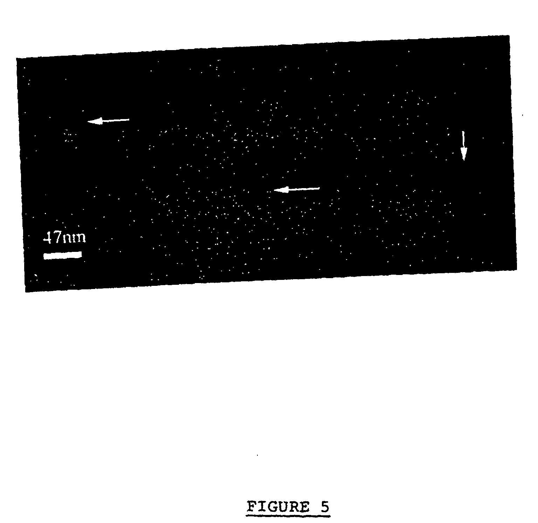

- la figure 5 représente une photo d'un bâton moléculaire selon l'invention.

Il doit être bien entendu, toutefois, que ces exemples sont donnés uniquement à titre d'illustration objet de l'invention, dont ils ne constituent en aucune manière une limitation.

### Exemple 1 : Préparation d'un bâton moléculaire biotinylé pour la fixation de streptavidine

Dans le but de fixer et de cristalliser la streptavidine ou une streptavidine de fusion, un polymère poly-(phénylèneéthynylène) fonctionnalisé par des biotines a été préparé.

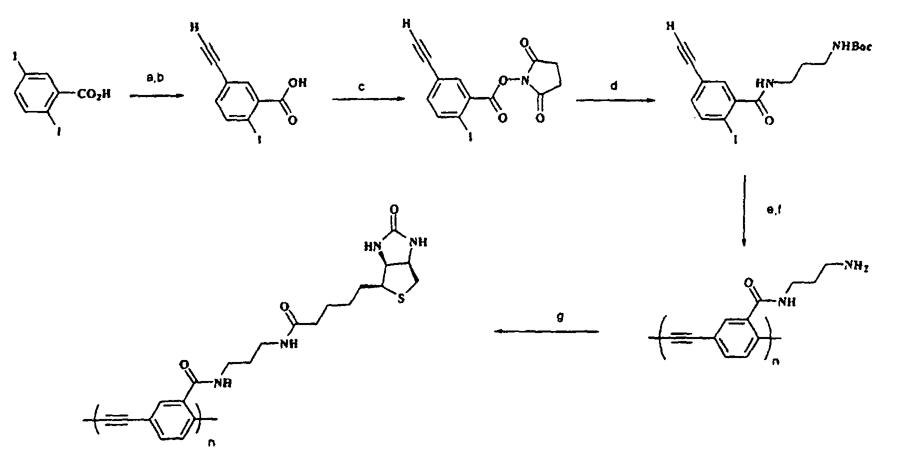

### Conditions :

a. TMSA, PdCl₂(PPh₃)₂, CuI, THF/TEA ; b. KOH, MeOH ; c. NHS, DCC, THF ; d. H₂N-(CH₂)₃-NHBoc, CH₂Cl₂, TEA ; e. PdCl₂(PPh₃)₂, CuI, THF/TEA ; f. TFA, CH₂Cl₂ ; g. Biotine-NHS, DMF, TEA.

### Protocoles expérimentaux

### (3-aminopropyl)-carbamate de t-butyle :

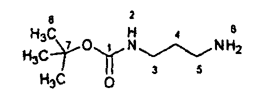

### MODE OPERATOIRE

A 0°C, 2,6 g de dicarbonate de *t*-butyle (11,9 mmol, 0,1 éq.), en solution dans 10 ml de MeOH, sont additionnés goutte à goutte sur 10 ml de propane diamine (120 mmol., 1 éq.) en solution dans 40 ml de MeOH. L'agitation est maintenue à température ambiante pendant 15h., puis le milieu réactionnel est évaporé. Le résidu est repris dans 20 ml d'eau et 50 ml de CH₂Cl₂, la phase organique est séchée sur MgSO₄, filtrée puis évaporée pour conduire à 1,8 g d'une huile incolore (Rdt : 87% / Boc₂O), qui est utilisée dans les étapes ultérieures sans purification supplémentaire.
**FB** : C₈H₁₈O₂N₂ **PM :** 174 g/mol
**CCM** : Rf(CH₂Cl₂ / MeOH / TEA : 69 / 30 / 1) : 0,26 ;
**RMN** ^{**1**}**H (300 MHz, CDCl**₃) : δ 4,92 (s1, 1H, H₂) ; 3,16 (tt, J₃₋₄ = 6,6 Hz, J₃₋₂ = 7,2 Hz, 2H, H₃) ; 2,73 (t , J₅₋₄ = 6,6 Hz, 2H, H₅) ; 1,57 (tt, J_{4-3 et 4-5} = 6,6 Hz, 2H, H₄) ; 1,41 (s, 9H, H₈) ; 1,17 (s1, 2H, H₆) ;
**RMN** ^{**13**}**C (75,47 MHz, CDCl**₃) : δ 155,88 (1C, C₁) ; 78,73 (1C, C₇) ; 39,42 (1C, C₅) ; 38,15 (1C, C₃) ; 33,16 (1C, C₄) ; 28,15 (3C, C₈) ;
**SM (70eV/DCI/NH3/intensité %)** : m/e : 175 (100, [M+1]⁺) ; 192 (10, [M+18]⁺) ;

### [3-(5-éthynyl-2-iodo-benzoylamino)-propyl]-carbamate de t-butyle :

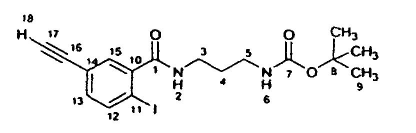

### MODE OPERATOIRE

174 mg de (3-aminopropyl)-carbamate de *t*-butyle (1 mmol, 1 éq.), en solution dans 7 ml de CH₂Cl₂ et 0,5 ml de triméthylamine sont additionnés sur 369 mg de 2-iodo-5-éthynyl-benzoate de 2,5-dioxo-pyrrolidin-1-yle (1 mmol, 1 éq.) en solution dans 7 ml de CH₂Cl₂. Le milieu réactionnel est agité à température ambiante pendant 48h., puis est évaporé. Le résidu obtenu est purifié par chromatographie sur gel de silice 60H (Hexane/EtOAc : 1/1) pour conduire à 416 mg d'un solide blanc avec un rendement de 97%.
**FB** : C ₁₇H₂₁O₃N₂ **PM :** 428 g/mol
**CCM** : Rf(Hexane / EtOAc : 1 / 1) : 0,40 ;
**RMN** ^{**1**}**H (300 MHz, CDCl**_{**3**}**)** : δ 7,80 (d, J₁₂₋₁₃ = 8,2 Hz, 1H, H₁₂) ; 7,46 (d, J₁₅₋₁₃ = 2,0 Hz, 1H, H₁₅) ; 7,17 (dd, J₁₃₋₁₂ = 8,2 Hz, J₁₃₋₁₅ = 2,0 Hz, 1H, H₁₃) ; 6,55 (s1, 1H, H₂) ; 4,92 (s1, 1H, H₆) ; 3,48 (tt, J₃₋₄ = 6,2 Hz, J₃₋₂ = 6,0 Hz, 2H, H₃) ; 3,27 (tt, J₅₋₄ = 5,7 Hz, J₅₋₆ = 6,4 Hz, 2H, H₅) ; 1,70-1,78 (m, 2H, H₄) ; 1,41 (s, 9H, H₈) ;
**RMN** ^{**13**}**C (75,47 MHz, CDCl**_{**3**}**)** : δ 166,70 (1C, C₁) ; 156,44 (1C, C₇) ; 142,38 (1C, C₁₀) ; 139,63, 133,74 (2C, C₁₂, C₁₃) ; 131,05 (1C, C₁₅) ; 122,22 (1C, C₁₄) ; 92,81 (1C, C₁₁) ; 81,62 (1C, C₁₆) ; 79,26, 79,17 (2C, C₁₇, C₇) ; 37,07, 36,42 (2C, C₅, C₃) ; 29,83 (1C, C₄) ; 28,14 (3C, C₈) ;
**SM (70eV/DCI/NH3/intensité %)** : m/e : 429 (26, [M+1]⁺) ; 446 (100, [M+18]⁺) ;

### Polymérisation de [3-(5-éthynyl-2-iodo-benzoylamino)-propyl]-carbamate de t-butyle :

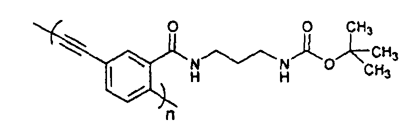

### MODE OPERATOIRE

350 mg de [3-(5-éthynyl-2-iodo-benzoylamino)-propyl]-carbamate de *t*-butyle (0,81 mmol, 1 éq.) sont placés dans un mélange constitué de 24,5 ml de THF et 24,5 ml de triéthylamine, puis 57 mg de palladiumbisdichlorobistriphénylphosphine (0,081 mmol, 0,1 éq.) et 57 mg d'iodure de cuivre (0,28 mmol, 0,3 éq.) sont additionnés. Le milieu réactionnel est chauffé à 50°C pendant 15h. Après être revenu à température ambiante le milieu réactionnel est versé sur 900 ml d'acétone. 160 mg de polymère, sous forme d'un solide jaune, sont récupérés par centrifugation de l'acétone.

### Hydrolyse du polymère

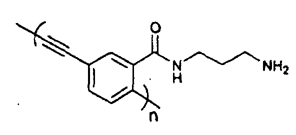

### MODE OPERATOIRE

50 mg de polymère sont placés en suspension dans 1 ml de CH₂Cl₂, puis à 0°C, 0,5 ml d'acide trifluoroacétique sont additionnés goutte à goutte, le milieu réactionnel devient alors soluble. Après 2h. d'agitation le milieu réactionnel est évaporé, puis repris en suspension dans un mélange constitué de 1 ml de CH₂Cl₂ et 1 ml de triéthylamine. Le précipité est récupéré par centrifugation, lavé plusieurs fois à l'eau, puis lyophilisé.
**U.V. (HCl 0,1N, 0,208mg/ml)** : 348 (5856) ; 321 (5317) ; 301 (3990) ; 283 (3317) ; 201 (8519) ;

### Couplage de la biotine

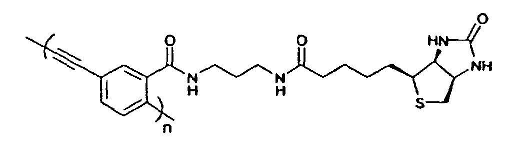

### MODE OPERATOIRE

15 mg de polymère et 15 mg de biotine-*N*-hydroxysuccinimide sont mis en suspension dans 10 ml de DMF. Après 48h. d'agitation le milieu réactionnel est filtré, évaporé, puis repris en suspension dans une solution de CH₂Cl₂. Le précipité est récupéré par centrifugation, lavé plusieurs fois à l'acétate d'éthyle, puis lyophilisé.

### Exemple 2 : Préparation d'un bâton moléculaire fonctionnalisé par un complexe de nickel Ni-NTA

Dans le but de fixer et de cristalliser des macromolécules biologiques comportant une étiquette poly-histidine, nous avons préparé un polymère de type poly-(phénylèneéthynylène) fonctionnalisé par des complexes de nickel-NTA. La méthode de préparation de NTA*, l'analogue du NTA, est identique à celle décrite par C. Vénien-Brian *et al* (*J. Mol. Biol.* **1997,** vol 274, pp. 687-692).

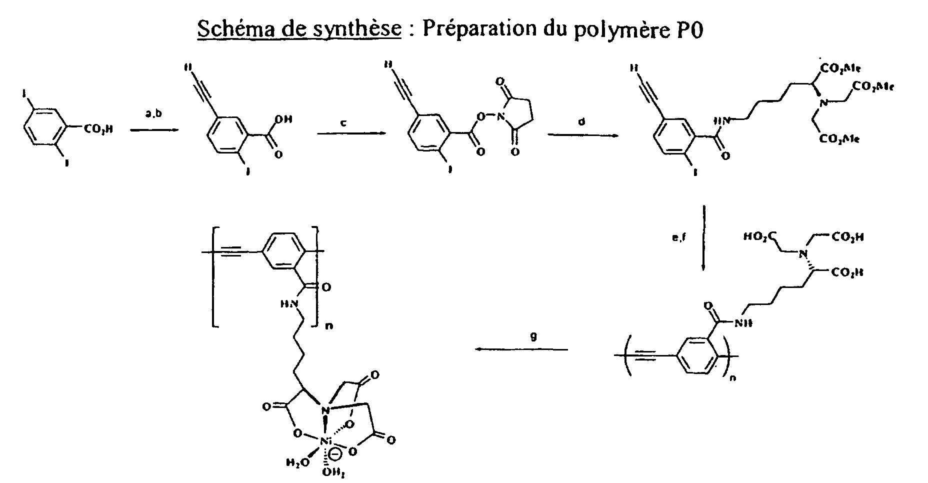

### Conditions :

a. TMSA, PdCl₂(PPh₃)₂, Cul, THF/TEA ; b. KOH, MeOH ; c. NHS, DCC, THF ; d. NTA* CH₂Cl₂, TEA ; e. PdCl₂(PPh₃)₂, Cul, THF/TEA ; f. KOH, MeOH ; g. NiCl₂.6H₂O, Tris (10mM, pH 8).

### Protocoles expérimentaux

### Acide 2-iodo-5-triméthylsilanyléthynyl-benzoïque :

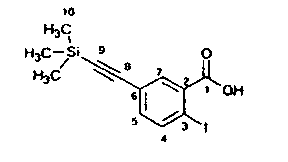

### MODE OPERATOIRE

1,12 g d'acide 2,5-diiodo-benzoïque (3mmol, 1 éq.), 210 mg de dichlorobis(triphenylphosphine palladium (II) (0,3mmol, 0,1 éq.) et 200 mg de iodure de cuivre(I) (1 mmol, 0,34 éq.) sont mis en solution dans 60 ml d'un mélange THF/TEA (3/1). Après addition de 425 µl de triméthylsilylacétylène (3 mmol, 1 éq.), l'agitation est poursuivie à température ambiante pendant 16 heures à l'abri de la lumière. Le milieu réactionnel est alors évaporé à sec et le résidu obtenu est purifié par flash-chromatographie sur silice 60H (Hexane/EtOAc/AcOH ; 70/30/1%) pour fournir après séchage sous vide 754 mg d'acide 2-iodo 5-triméthylsilanyléthynyl-benzoïque sous la forme de fines aiguilles jaunes (Rdt : 73 %).
**FB** : C₁₂H₁₃IO₂Si **PM** : 344.221 g/mol
**CCM** : Rf (Hexane / EtOAc/AcOH : 50/50/1%) : 0,55 ;
**RMN** ^{**1**}**H (300 MHz, Acétone d6)** : δ 10,93 (s large, 1H, H₁) ; 8,02 (d, J₄₋₅ = 8,2 Hz 1H, H₄) ; 7,92 (d, J₅₋₇ = 1,8 Hz, 1H, H₇) ; 7,27 (dd, J₄₋₅ = 8,2 Hz, J₅₋₇ = 1,8 Hz, 1H, H₅) ; 0,25 (s, 9H, H₁₀) ;
**RMN** ^{**13**}**C (75,47 MHz, Acétone d6) :** δ 166,99 (1C, C₁) ; 142,24 (1C, C₄) ; 136,85 (1C, C₂) ; 135,57 (1C, C₅) ; 134,16 (1C, C₇) ; 123,75 (1C, C₆) ; 103,59 (1C, C₃) ; 97,12 (1C, C₈) ; 94,52 (1C, C₉) ; - 0,28 (3C, C₁₀) ;
**SM (70eV/DCI/NH3/intensité %) :** m/e : 362 (100, [M+18]⁺) ;

### Acide 2-iodo-5-éthynyl-benzoïque :

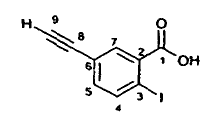

### MODE OPERATOIRE

A une solution de 500 mg d'acide 2-iodo 5-triméthylsilanyléthynyl-benzoïque (1,45 mmol, 1 éq.) dans 30 ml de méthanol, sont ajoutés à 0 °C, 4,5 ml d'une solution aqueuse d'hydroxyde de potassium (1N). Après 2h. d'agitation à température ambiante, le milieu réactionnel est lavé avec 2x50 ml de CH₂Cl₂ puis la phase aqueuse est réacidifié jusqu'à pH 2 par addition d'une solution molaire d'acide chlorhydrique. Après extraction avec 2x50 ml de CH₂Cl₂, les phases organiques sont rassemblées pour fournir après séchage et évaporation 383 mg d'acide 2-iodo-5-éthynyl-benzoïque sous la forme d'un solide jaune (Rdt : 97 %).
**FB :** C₉H₅IO₂ **PM :** 272,039 g/mol
**CCM** : Rf (Hexane / EtOAc/AcOH : 50/50/1%) : 0,4 ;
**RMN** ^{**1**}**H (300 MHz, Acétone d6) :** δ 8,08 (d, J₄₋₅ = 8,1 Hz 1H, H₄) ; 7,93 (d, J₅₋₇ = 1,9 Hz, 1H, H₇) ; 7,36 (dd, J₄₋₅ = 8,1 Hz, J₅₋₇ = 1,9 Hz, 1H, H₅) ; 3,87 (s, 1H, H₉) ;
**RMN** ^{**13**}**C (75,47 MHz, Acétone d6)** : δ 167,01 (1C, C₁) ; 142,22 (1C, C₄) ; 137,32 (1C, C₂) ; 135,72 (1C, C₅) ; 134,12 (1C, C₇) ; 123,00 (1C, C₆) ; 94,51 (1C, C₃) ; 82,08 (1C, C₈) ; 81,22 (1C, C₉) ;
**SM (70eV/DCI/NH3/intensité %) :** m/e : 290 (100, [M+18]⁺) ; 307 (66, [M+35]⁺) ; 562 (8, [2M+18]⁺) ;

### 2-Iodo-5-éthynyl-benzoate de 2,5-dioxo-pyrrolidin-1-yle :

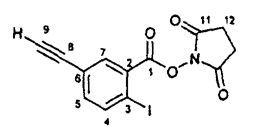

### MODE OPERATOIRE

A une solution de 544 mg (2 mmol, 1 éq) d'acide 2-iodo-5-éthynyl-benzoïque et 276 mg de NHS (2,4 mmol, 1,2 éq.) dans 30 ml de THF sont ajoutés à 0°C 495 mg (2,4 mmol, 1,2 éq) de DCC en solution dans 20 ml de THF. Le mélange est agité pendant une nuit à température ambiante. Le milieu réactionnel est alors filtré, puis évaporé, et le résidu obtenu est purifié par flash-chromatographie sur silice 60H (Hexane / EtOAc ; 70/30) pour fournir après séchage sous vide 568 mg de 2-iodo-5-éthynyl-benzoate de 2,5-dioxo-pyrrolidin-1-yle sous la forme d'un solide jaune (Rdt : 77 %).
**FB** : C₁₃H₈INO₄ **PM** : 369,114 g/mol
**CCM :** Rf (Hexane / EtOAc : 50/50) : 0,46 ;
**RMN** ^{**1**}**H (300 MHz, CDCl**_{**3**}**)** : δ 8,18 (d, J₅₋₇ = 2,4 Hz, 1H, H₇) ; 8,3 (d, J₄₋₅ = 8,5 Hz 1H, H₄) ; 7,34 (dd, J₄₋₅ = 8,5 Hz, J₅₋₇ = 2,4 Hz, 1H, H₅) ; 3,22 (s, 1H, H₉) ; 2,91 (s, 4H, H₁₁) ;
**RMN** ^{**13**}**C (75,47 MHz, CDCl**_{**3**}) : δ 168,53 (2C, C₁₁) ; 160,49 (1C, C₁) ; 141,92 (1C, C₄) ; 136,97 (1C, C₅) ; 135,09 (1C, C₇) ; 129,67 (1C, C₂) ; 122,60 (1C, C₆) ; 95,60 (1C, C₃) ; 80,81 (1C, C₈) ; 80,20 (1C, C₉) ; 25,46 (2C, C₁₂) ;
**SM (70eV/DCI/NH3/intensité %) :** m/e : 387 (100, [M+18]⁺) ; 404 (27, [M+35]⁺) ;

### 2-(Bis-méthoxycarbonyiméthyl-amino)-6-(2-iodo-5-éthynylbenzoylamino)-hexanoate de méthyle :

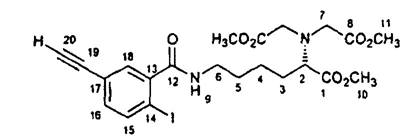

### MODE OPERATOIRE

A une solution de 320 mg (1,05 mmol, 1,05 éq.) de NTA* dans 20 ml de CH₂Cl₂ sont ajoutés 1 ml de TEA et 370 mg (1 mmol, 1 éq) de 2-iodo-5-éthynyl-benzoate de 2,5-dioxo-pyrrolidin-1-yle en solution dans 20 ml de CH₂Cl₂. Le mélange est agité pendant 16 heures à température ambiante. Le milieu réactionnel est alors évaporé, pour fournir après chromatographie sur silice (CH₂Cl₂/MeOH/TEA ; 90/10/1), 380 mg de 2-(bis-méthoxycarbonylméthyl-amino)-6-(2-iodo-5-éthynylbenzoylamino)-hexanoate de méthyle sous la forme d'une huile orange (Rdt : 68%).
**FB** : C₂₂H₂₇IN₂O₇ **PM** : 558,372 g/mol
**CCM** : Rf (Hexane / EtOAc : 50/50) : ;
**RMN** ^{**1**}**H (300 MHz, CDCl**_{**3**}**)** : δ 7,74 (d, J₁₅₋₁₆ = 8,2 Hz 1H, H₁₅) ; 7,41 (d, J₁₆₋₁₈ = 2,1 Hz, 1H, H₁₈) ; 7,09 (dd, J₁₅₋₁₆ = 8,2 Hz, J₁₆₋₁₈ = 2,1 Hz, 1H, H₁₆) ; 6,46 (t, J₆₋₉ = 5,1 Hz, 1H, H₉) ; 3,62 et 3,56 (s, 13H, H₁₀, H₁₁, H₇) ; 3,38 (t, J₂₋₃ = 7,3 Hz, 1H, H₂) ; 3,36 (t, J₅₋₆ = 6,6 Hz, J₆₋₉ = 5,1 Hz, 2H, H₆) ; 1,40 - 1,80 (m, 6H, H₃, H₄, H₅) ;
**RMN** ^{**13**}**C (75,47 MHz, CDCl**_{**3**}**)** : δ 172,82 (1C, C₁) ; 171,54 (2C, C₈) ; 168,42 (1C, C₁₂) ; 142,57 (1C, C₁₃) ; 139,49 (1C, C₁₅) ; 133,54 (1C, C₁₆) ; 131,17 (1C, C₁₈) ; 122,00 (1C, C₁₇) ; 93,04 (1C, C₁₄) ; 81,69 (1C, C₁₉) ; 79,19 (1C, C₂₀) ; 63,95 (1C, C₂) ; 52,25 (2C, C₇) ; 51,41 et 51,22 (3C, C₁₀, C₁₁) ; 39,53 (1C, C₆) ; 29,37 (1C, C₃) ; 28,08 (1C, C₅) ; 22,71 (1C, C₄) ;
**SM (70eV/DCI/NH3/intensité %)** : m/e : 631 (9, [M+1]⁺) ; 648 (100, [M+18]⁺) ;
**Microanalyse pour C**_{**22**}**H**_{**27**}**IN**_{**2**}**O**_{**7**} **:**
Calc. : C, 47,32 ; H, 4,87 ; N, 5,02 ; O, 20,06 ; I, 22,73 ;
Exp. : C, 47,01 ; H, 4,95 ; N, 4,87

### Polymérisation de 2-(bis-méthoxycarbonylméthyl-amino)-6-(2-iodo-5-éthynyl-benzoylamino)-hexanoate de méthyle :

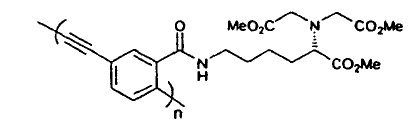

### MODE OPERATOIRE

84 mg de 2-(bis-méthoxycarbonylméthyl-amino)-6-(2-iodo-5-éthynyl-benzoylamino)-hexanoate de méthyle (0,15 mmol, 1 éq.) sont placés dans un mélange constitué de 6 ml de THF et 2 ml de triéthylamine, puis 11 mg de palladiumbisdichlorobistriphénylphosphine (17 µmol, 0,1 éq.) et 15 mg d'iodure de cuivre (79 µmol, 0,5 éq.) sont additionnés. Le milieu réactionnel est chauffé à 50°C pendant 15h. Après être revenu à température ambiante le milieu réactionnel est versé sur 200 ml d'acétone. 55 mg de polymère, sous forme d'un solide jaune, sont récupérés par centrifugation de l'acétone.

### Hydrolyse du polymère

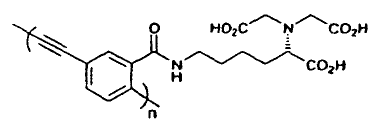

### MODE OPERATOIRE

50 mg de polymère sont placés en suspension dans 5 ml de MeOH, puis à 0°C, 5 ml d'une solution molaire d'hydroxyde de potassium sont additionnés goutte à goutte. Après 96h. d'agitation le milieu réactionnel est filtré, évaporé puis repris dans un minimum d'eau. La solution obtenue est alors réacidifiée par addition lente d'une solution d'acide chlorhydrique 0,1M. Le précipité formé est récupéré par centrifugation, lavé plusieurs fois à l'eau, puis lyophilisé.

### Complexation des ions nickel :

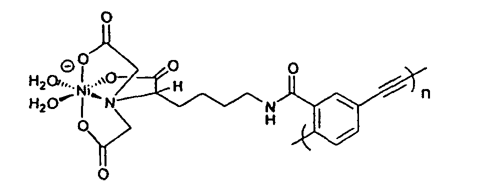

### Polymère P0

### MODE OPERATOIRE

1 mg de polymère sont mis en solution dans 5,15 ml de tampon Tris(10 mM, pH 8). 20 µl d'une solution de NiCl₂.6H₂O (500 mM) dans du Tris (10 mM, pH 8) sont alors additionnées à 1 ml de la solution de polymère. Après dialyse, le composé est utilisé en solution sans autre purification.

### Exemple 3 : Conception d'une librairie de bâtons moléculaires fonctionnalisés par des complexes nickel-NTA (polymère Ppm) pour la fixation de protéines étiquetées-histidine.

### Approche synthétique pour contrôler la distance L₁

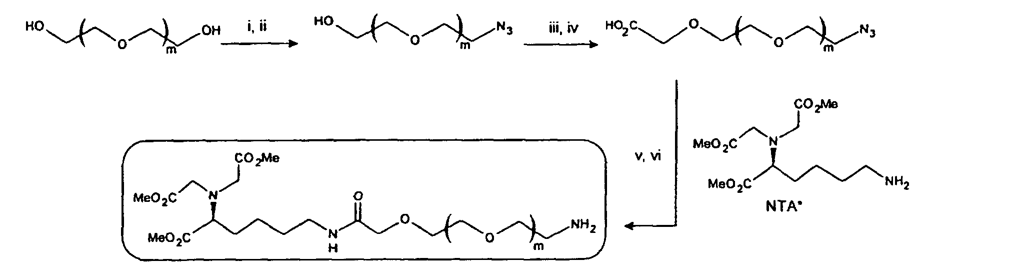

### Conditions :

i. TsCl, TEA, THF; ii. NaN₃, CH₃CN; iii. NaH, BrCH₂CO₂tBu, THF; iv. TFA, CH₂Cl₂; v. SOCl₂/ TEA, CH₂Cl₂; vi. H₂, Pd/C, MeOH.

### Approche synthétique pour contrôler la distance L₂

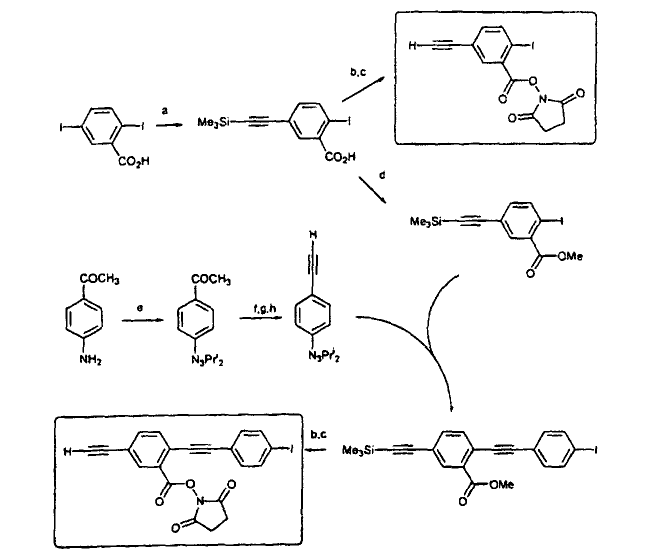

### Conditions :

a. TMSA, PdCl₂(PPh₃)₂, CuI, THF/TEA; b. KOH, MeOH; c. NHS, DCC, THF; d. MeOH, EDC, HOBT, THF; e. HCl, NaNO₂ / K₂CO₃, HNPrⁱ₂; f. LDA, ClPO(OEt)₂; g. LDA (2eq.), Me₃SiCl; h. K₂CO₃, MeOH; i. PdCl₂(PPh₃)₂, CuI, THF/TEA; j. MeI.

### Protocoles expérimentaux

Les protocoles expérimentaux de polymérisation et d'hydrolyse sont identiques à ceux décrits pour le bâton P0.

### Préparation du monomère pour le bâton P₁₀

### Toluène-4-sulfonate de 2-(2-hydroxy-éthoxy)éthyle :

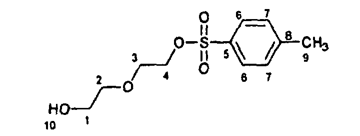

### MODE OPERATOIRE

50 ml de diéthylèneglycol (0,5 mol, 10 éq.) et 10 g de chlorure de tosyle (0,05 mol, 1 éq.) sont mis en solution dans 200 ml de dichlorométhane. Après avoir additionné goutte à goutte 7,3 ml de triéthylamine (0,05 mol, 1 èq.), le milieu réactionnel est agité pendant 16 heures à température ambiante. Après hydrolyse avec 100 ml d'eau, le milieu réactionnel est extrait deux fois avec 100 ml de dichlorométhane, la phase organique est séchée sur sulfate de magnésium, filtrée puis évaporée pour conduire à un résidu qui est purifié par flash-chromatographie sur silice 60H (Hexane/EtOAc : 40/60). 13,4 g de O-tosyldiéthylèneglycol sont obtenus sous la forme d'une huile légère incolore (Rdt : 99% / TsCl).
**FB** : C₁₁H₁₆O₅S **PM :** 260,2 g/mol
**CCM** : Rf (Hexane / EtOAc : 7 / 3) : 0, 32
**RMN** ^{**1**}**H (300 MHz, CDCl**_{**3**}**)** : δ 7,78 (d, J₆₋₇ = 8,1 Hz, 2H, H₆) ; 7,33 (d, J₇₋₆ = 8,1 Hz 2H, H₇) ; 4,18 (t, J₄₋₃ = 3,2 Hz, 2H, H₄) ; 3,69-3,63 (m, 4H, H₂₋₃) ; 3,51 (t, J₁₋₂ = 3,2 Hz, 2H, H₁) ; 2,43 (s, 3H, H₉) ; 1,98 (s1, 1H, H₁₀) ;
**RMN** ^{**13**}**C (75,47 MHz, CDCl**_{**3**}**)** : δ 144,70 (1C, C₈) ; 132,82 (1C, C₅) ; 129,60 (2C, C₆) ; 127,69 (2C, C₇) ; 72,24 (1C, C₂) ; 68,91 (1C, C₃) ; 68,35 (1C, C₄) ; 61,40 (1C, C₁) ; 21,33 (1C, C₉) ;
**SM (70eV/DCI/NH3/intensité %)** : m/e : 278 (100, [M+18]⁺) ;

### 2-(2-azido-éthoxy)-éthanol 16a :

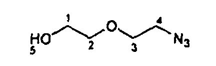

### MODE OPERATOIRE

12,27 g de toluène-4-sulfonate de 2-(2-hydroxy-éthoxy)éthyle (0,047 mol, 1 éq.) sont mis en solution dans 200 ml d'acétonitrile, puis 3,67 g d'azoture de sodium (0,056 mol, 1,2 éq.) sont additionnés. Le milieu réactionnel est chauffé à 80°C pendant 16 heures. Après hydrolyse avec 100 ml d'eau, le milieu réactionnel est extrait deux fois avec 100 ml d'acétate d'éthyle. La phase organique est séchée sur sulfate de magnésium, filtrée puis évaporée pour conduire à 3,9 g d'une huile légère incolore (Rdt : 63%).
**FB** : C₄H₉O₂N₃ **PM** : 131 g/mol
**CCM** : Rf (Hexane / EtOAc : 1/1) : 0,28;
**RMN** ^{**1**}**H (300 MHz, CDCl**_{**3**}**)** : δ 3,72 (t, J₂₋₁ = 4,7 Hz, 2H, H₂) ; 3,66 (t, J₃₋₄ = 4,8 Hz 2H, H₃) ; 3,58 (t, J₁₋₂ = 4,7 Hz, 2H, H₁) ; 3,38 (t, J₄₋₃ = 4,8 Hz, 2H, H₄) ; 2,32 (s1, 1H, H₅) ;
**RMN** ^{**13**}**C (75,47 MHz, CDCl**_{**3**}**)** : δ 72,19 (1C, C₂) ; 69,82 (1C, C₃) ; 61,53 (1C, C₁)†; 50,49 (1C, C₄) ;
**SM (70eV/DCI/NH3/intensité %) :** m/e : 149 (100, [M+18]⁺) ;

### [2-(2-azido-éthoxy)-éthoxy]-acétate de t-butyle 19a :

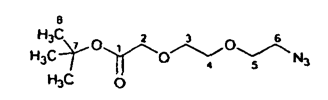

### MODE OPERATOIRE

1,42 g d'hydrure de sodium (0,035 mol, 1,2 éq.) sont mis en suspension dans 30 ml de tétrahydrofurane, puis à 0°C, 3,89 g de **16a** (0,029 mol, 1 éq.) en solution dans 10 ml de tétrahydrofurane sont additionnés goutte à goutte. L'agitation est maintenue à cette température pendant une demi-heure avant d'additionner lentement 8,71 ml de bromo-acétate de *t*-butyle (0,059 mol, 2 éq.). La température est remontée lentement et l'agitation est maintenue pendant une nuit. Le milieu réactionnel est hydrolysé avec 50 ml d'eau puis ce dernier est concentré pour conduire à un résidu qui est purifié par flash-chromatographie sur silice 60H (Hexane/EtOAc : 70/30). 3,95 g de produit sont récupérés sous la forme d'une huile légèrement jaune avec un rendement de 55%.
**FB :** C₁₀H₁₉O₄N₃ **PM :** 245 g/mol
**CCM** : Rf(Hexane / EtOAc : 7 / 3) : 0,47 ;
**RMN** ^{**1**}**H (300 MHz, CDCl**_{**3**}**)** : δ 4,02 (s, 2H, H₂) ; 3,70-3,66 (m, 6H, H_{3,4,5}) ; 3,39 (t, J₆₋₅ = 5,0 Hz, 2H, H6) ; 1,46 (s, 9H, H₈) ;
**RMN** ^{**13**}**C (75,47 MHz, CDCl**_{**3**}**)** : δ 169,37 (1C, C₁) ; 81,33 (1C, C₇) ; 70,55-70,49 (2C, C₃ₑₜ₄) ; 69,81 (1C, C₅) ; 68,90 (1C, C₂) ; 50,46 (1C, C₆) ; 27,86 (3C, C₈) ;
**SM (70eV/DCI/NH3/intcnsité %) :** m/e : 207 (15, [M+1]⁺) ; 263 (100, [M+18]⁺) ;

### 6-(2-[2-(2-azido-éthoxy)-éthoxy]-acétylamino)-2-(bis-méthoxycarbonyl (méthyl-amino)-hexanoate de méthyle 20a :

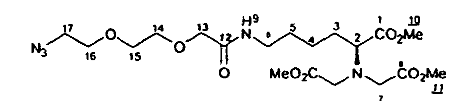

### MODE OPERATOIRE

3,95 g de **19a** (0,016 mol, 1 éq.) sont mis en solution dans 20 ml de dichlorométhane puis 10 ml d'acide trifluoroacétique sont additionnés goutte à goutte. Après avoir agité le milieu réactionnel à 60°C pendant deux heures, celui-ci est évaporé à sec. Le résidu obtenu est ensuite repris dans 4 ml de chlorure de thionyle et agité pendant une heure à température ambiante. Le milieu est de nouveau évaporé à sec, repris deux fois avec 4 ml de dichlorométhane puis réévaporé. Le chlorure d'acide ainsi formé est repris dans 10 ml de dichlorométhane puis 6,43 g de tête polaire NTA* (0,016 mol, 1 éq.) en solution dans 10 ml de dichlorométhane et 4,46 ml de triéthylamine (0,032 mol, 2 éq.) sont additionnés. Le milieu réactionnel est agité à température ambiante pendant une nuit puis évaporé à sec pour conduire à un résidu qui est purifié par flash-chromatographie sur silice 60H (MeOH/CH₂Cl₂ : 3/97). 1,84 g de produit sont obenus sous la forme d'une huile jaune avec un rendement de 25%.
**FB :** C₁₉H₃₃O₉N₅ **PM :** 475 g/mol
**CCM** : Rf (EtOAc pur) : 0,34 ;
**RMN** ^{**1**}**H (300 MHz, CDCl**_{**3**}**)** : δ 6,79 (tl, J₉₋₆ = 5,3 Hz, 1H, H₉) ; 3,88 (s, 2H, H₁₃) ; 3,59-3,62 (m, 15H, H₁₀, H₁₁, H₁₅, H₁₆) ; 3,54 (s, 4H, H₇) ; 3,29-3,34 (m, 3H, H₂, H₁₇) ; 3,18 (dt, J₆₋₅ = 6,5 Hz, J₆₋₉ = 5,3 Hz, 2H, H₆) ; 1,27-1,65 (m, 6H, H₃, H₄, H₅) ;
**RMN** ^{**13**}**C (75,47 MHz, CDCl**_{**3**}**)** : δ 172,68 (1C, C₁) ; 171,42 (2C, C₈) ; 169,29 (1C, C₁₂) ; 70,52 (1C, C₁₅) ; 70,20 (1C, C₁₃) ; 69,91 (1C, C₁₄) ; 69,75 (1C, C₁₆) ; 64,35 (1C, C₂) ; 52,10 (2C, C₇) ; 51,27 et 50,30 (2C, C₁₀, C₁₁) ; 51,06 (1C, C₁₇) ; 38,30 (1C, C₆) ; 29,74 (1C, C₃) ; 28,94 (1C, C₅) ; 22,93 (1C, C₄) ;
**SM (70eV/DCI/NH3/intensité %)** : m/e : 476 (100, [M+1]⁺) ;

### 6-(2-[2-(2-amino-éthoxy)-éthoxy]-acétylamino)-2-(bis-méthoxy carbonylméthyl-amino)-hexanoate de méthyle 21a :

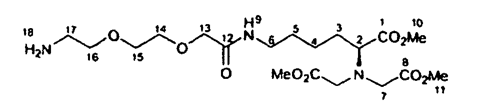

### MODE OPERATOIRE

1,84 g de **20a** (3,88 mmol., 1 éq.) sont mis en solution dans 30 ml de méthanol, puis 184 mg de palladium sur charbon (10% en masse) sont additionnés. Le milieu réactionnel est purgé trois fois avec de l'hydrogène puis abandonné à température ambiante durant une nuit sous une atmosphère d'hydrogène. Après avoir filtré sur célite le palladium, le filtrat est évaporé pour conduire à 1,70 g (Rdt : 97%) d'une huile jaune qui est utilisée dans les étapes ultérieures sans purification supplémentaire.
**FB** : C₁₉H₃₅O₉N₃ **PM :** 449 g/mol
**CCM** : Rf (MeOH / CH₂Cl₂ : 1 / 9) : 0,17 ;
**RMN** ^{**1**}**H (300 MHz, CDCl**_{**3**}**)** : δ 6,92 (s1, 1H, H₉) ; 3,85 (s, 2H, H₁₃) ; 3,55-3,13 (m, 26H, H₂, H₆, H₇, H₁₀, H₁₁, H₁₃, H₁₄, H₁₅, H₁₆, H₁₇) ; 1,24-1,62 (m, 6H, H₃, H₄, H₅) ;
**SM (70eV/DCI/NH3/intensité %)** : m/e : 450 (100, [M+1]⁺) ;

### 2-(bis-méthoxycarbonyiméthyl-amino)-6-(2-[2-(2-(5-éthynyl-2-iodo-benzoylamino)-éthoxy)-éthoxy]-acétylamino)-hexanoate de méthyle 22a :

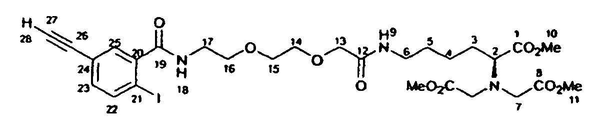

### MODE OPERATOIRE

150 mg de 2-iodo-5-éthynyl-benzoate de 2,5-dioxo-pyrrolidin-1-yle (0,33 mmol., 1 éq.) en solution dans 5 ml de CH₂Cl₂ et 0,2 ml de triéthylamine sont cannulés sur 123 mg de **21a** (0,33 mmol., 1 éq.) placé en solution dans 2 ml de CH₂Cl₂. Le milieu réactionnel est agité à température ambiante pendant 24h, puis évaporé. Le résidu est chromatographié sur gel de silice 60H (MeOH/CH₂Cl₂ : 3/97) pour conduire à 145 mg d'une huile légèrement jaune avec un rendement de 62%.
**FB** : C₂₈H₃₈O₁₀N₃I **PM :** 703 g/mol
**CCM** : Rf (MeOH / CH₂Cl₂ : 1 / 9) : 0,50 ;
**RMN** ^{**1**}**H (300 MHz, CDCl**_{**3**}**)** : δ 7,79 (d, J₂₃₋₂₅ = 8,1 Hz, 1H, H₂₃) ; 7,45 (d, J₂₅₋₂₃ = 1,5 Hz, 1H, H₂₅) ; 7,15 (dd, J₂₃₋₂₅ = 1,5 Hz et J₂₃₋₂₂ = 8,1 Hz 1H, H₂₃) ; 6,76 (t1, 1H, H₉) ; 6,50 (t1, 1H, H₁₈) ; 4,11 (s, 2H, H₁₃) ; 3,58-3,96 (m, 17H, H₁₀, H₁₁, H₁₄, H₁₅, H₁₆) ; 3,51 (s, 4H, H₇) ; 3,20-3,41 (m, 5H, H₂, H₆, H₁₇) ; 3,17 (s, 1H, H₂₈) ; 1,44-1,71 (m, 6H, H₃, H₄, H₅) ;
**RMN** ^{**13**}**C (75,47 MHz, CDCl**_{**3**}**)** : δ 172,75 (1C, C₁₉) ; 171,64 (1C, C₁) ; 171,49 (1C, C₈) ; 169,38 (1C, C₁₂) ; 142,14 (1C, C₂₀) ; 139,69 (1C, C₂₅) ; 133,86 (1C, C₂₂) ; 131,21 (1C, C₂₃) ; 122,25 (1C, C₂₄) ; 115,97 (1C, C₂₁) ; 92,71 (1C, C₂₆) ; 79,45 (1C, C₂₇) ; 70,65 (1C, C₁₅) ; 70,36 (1C, C₁₃) ; 69,87 (1C, C₁₄) ; 69,41 (1C, C₁₆) ; 64,36 (1C, C₂) ; 52,39 ; 51,16 (2C, C₇) ; 52,16 ; 51,37 (3C, C₁₀, C₁₁) ; 39,46 (1C, C₁₇) ; 39,37 (1C, C₆) ; 29,77 (1C, C₃) ; 28,95 (1C, C₅) ; 22,98 (1C, C₄) ;
**SM (70eV/DCI/NH3/intensité %) :** m/e :704 (100, [M+1]⁺) ; 721 (36, [M+18]⁺)
**Microanalyse pour C**_{**28**}**H**_{**38**}**N**_{**3**}**O**_{**10**} **I :**
Calc. : C, 47,80 ; H, 5,44 ; N, 5,97 ; O, 22,74 ; 1, 18,03
Exp. : C, 47,75 ; H, 5,71 ; N, 5,72 ;

### Préparation du monomère pour le bâton P21

### 6-(2-(2-[2-(2-amino-éthoxy)-éthoxy]-éthoxy)-acétylamino)-2-(bis-méthoxycarbonylméthyl-amino)-hexanoate de méthyte 21b :

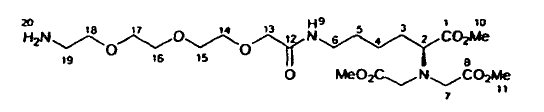

### MODE OPERATOIRE

Protocole identique à celui utilisé pour la préparation du produit **21a** en démarrant la synthèse à partir du triéthylène glycol.
**FB** : C₂₁H₃₉O₁₀N₃ **PM :** 493 g/mol
**CCM** : Rf (MeOH / CH₂Cl₂ / TEA : 1 / 9 / 0,1) : 0,27 ;
**RMN** ^{**1**}**H (300 MHz, CD**_{**3**}**OD)** : δ 4,59 (s1, 3H, H₉, H₂₀) ; 3,94 (s, 2H, H₁₃) ; 3,10-3,61 (m, 28H, H₂, H₆, H₇, H₁₀, H₁₁, H₁₄, H₁₅, H₁₆, H₁₇, H₁₈, H₁₉) ; 1,19-1,62 (m, 6H, H₃, H₄, H₅)
**SM (70eV/DCI/NH3/intensité %) :** m/e : 494 (100, [M+1]⁺) ;

### 4-(diisopropyltriazényl)acétophénone 25 :

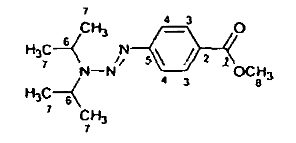

### MODE OPERATOIRE

1g (7,4 mmol) de 4-aminoacétophénone sont mis en solution dans un mélange constitué de 30 ml d'eau et 5 ml d'acide chlorhydrique concentré. Après avoir placé le milieu réactionnel à 0°C, 520 mg (7,54 mmol, 1,02 éq.) de nitrite de sodium en solution dans 1 ml d'eau sont additionnés. Après 30 min. d'agitation, le milieu réactionnel est additionné prudemment sur une solution composée de 8g de carbonate de potassium et de 8,17 ml (5,82 mmol, 7,8 éq.) de diisopropylamine dans 50 ml d'eau, placée à 0°C. L'agitation est maintenue à cette température pendant 30 min. puis le milieu réactionnel est hydrolysé avec 50 ml d'eau et la phase aqueuse est extraite quatre fois avec 50 ml d'éther éthylique. La phase organique est séchée sur sulfate de magnésium, filtrée puis évaporée pour conduire à un résidu qui est chromatographié sur gel de silice 60H (AcOEt/Hexane : 2/8) pour conduire à 1,18 g d'une poudre jaune avec un rendement de 64%.
**FB :** C₁₄H₂₁N₃O₂ **PM :** 247,33g/mol
**CCM** : Rf(Hexane / EtOAc : 9/1) : 0,40 ;
**RMN** ^{**1**}**H (300 MHz, CDCl**_{**3**}**)** : δ 7,92 (d, J₃₋₄ = 8,6 Hz, 2H, H₃) ; 7,44 (d, J₄₋₃ = 8,6 Hz, 2H, H₄) ; 5,33 (s1, 1H, H₆) ; 4,03 (s1, 1H, H₆) ; 2,57 (s, 3H, H₃) ; 1,37 (d1, 6H, H₇) ; 1,24 (d1, 6H, H₇) ;
**RMN** ^{**13**}**C (75,47 MHz, CDCl**_{**3**}**)** : δ 197,17 (1C, C₁) ; 155,32 (1C, C₅) ; 133,11 (1C, C₂) ; 129,30 (2C, C₃) ; 119,82 (2C, C₄) ; 49,17 (1C, C₆) ; 46,17 (1C, C₆) ; 26,23 (1C, C₈) ; 23,63, 19,11 (4C, C₇) ;
**SM (70eV/DCI/NH3/intensité %) :** m/e : 248 (100, [M+1]⁺) ;

### 1-(Diisopropyltriazényl)-4-((triméthylsilyl)éthynyl)benzène 26 :

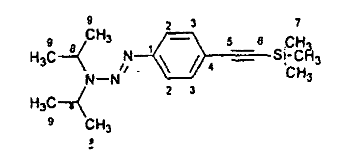

### MODE OPERATOIRE

8,62 g (34,9 mmol, 1 éq.) de 4-(diisopropyltriazényl)acétophénone en solution dans 30 ml de THF sont additionnés goutte à goutte, à -78°C, sur 1,03 éq. de LDA, formée, à 0°C, à partir de 5,17 ml de diisopropylamine (36,9 mmol, 1,06 éq.) et de 22,4 ml de BuLi 1,6M dans l'hexane (35,9 mmol, 1,03 éq.) dans 38,5 ml de THF. Le milieu réactionnel est agité à -78°C pendant une heure, puis 5,04 ml de chlorophosphate de diéthyle (34,9 mmol, 1 éq.) sont additionnés goutte à goutte et la température est remontée jusqu'à l'ambiante. Après 3 heures d'agitation, cette solution est additionnée sur 2,25 éq. de LDA, formée, à 0°C, à partir de 11 ml de diisopropylamine (78,5 mmol, 2,25 éq.) et de 49 ml de BuLi 1,6M dans l'hexane (78,5 mmol, 2,25 éq.) dans 80 ml de THF. Le milieu réactionnel est abandonné pendant la nuit, au cours de laquelle la température remonte lentement. Après avoir placé le ballon à 0°C, 4,86 ml de chlorure de triméthylsilyle (38,3 mmol, 1,1 éq.) sont additionnés, l'agitation est maintenue pendant 15 min., puis on hydrolyse avec 100 ml d'eau. La phase aqueuse est extraite trois fois avec 100 ml d'éther éthylique, puis la phase organique est séchée sur sulfate de magnésium, filtrée puis évaporée. Le résidu obtenu est purifié par flash chromatographie sur gel de silice 60H (Hexane pur) pour conduire à 6,08 g de 1-(diisopropyltriazényl)-4-((triméthylsilyl)éthynyl)benzène avec un rendement de 58%.
**FB :** C₁₇H₂₇N₃Si **PM :** 301 g/mol
**CCM :** Rf (Hexane) : 0,30 ;
**RMN** ^{**1**}**H (300 MHz, CDCl**_{**3**}**)** : δ 7,40 (d, J₂₋₃ = 8,5 Hz, 2H, H₂) ; 7,32 (d, J₃₋₂ = 8,5 Hz, 2H, H₃) ; 5,33 (s1, 1H, H₈) ; 4,03 (s1, 1H, H₈) ; 1,29 (s1, 12H, H₉) ; 0,24 (s, 9H, H₇) ;
**RMN** ^{**13**}**C (75,47 MHz, CDCl**_{**3**}**)** : δ 151,45 (1C, C₁) ; 132,42 (2C, C₂) ; 119,82 (2C, C₃) ; 118,66 (1C, C₄) ; 105,72 (1C, C₆) ; 93,05 (1C, C₅) ; 48,13, 46,17 (2C, C₈) ; 23,80, 19,11 (4C, C₉) ; -0,15 (3C, C₇) ;
**SM (70eV/DCI/NH3/intensité %)** : m/e : 302 (100, [M+1]⁺) ;

### 1-(Diisopropyltriazényl)-4-éthynylbenzène 27 :

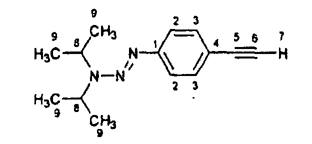

### MODE OPERATOIRE

6 g de 1-(diisopropyltriazényl)-4-((triméthylsilyl)éthynyl)benzène (19,9 mmol, 1 éq.) sont mis en solution dans 100 ml de MeOH et 13,7 g de K₂CO₃ (99,5 mmol, 5 éq.) sont additionnés petit à petit. Après avoir agité le milieu réactionnel à température ambiante pendant 15h., celui-ci est évaporé à sec, repris avec 100 ml d'eau et 100ml d'EtOAc. La phase aqueuse est extraite quatre fois avec 50 ml d'EtOAc, puis la phase organique est séchée sur sulfate de magnésium, filtrée puis évaporée pour conduire à 4,38 g de 1-(diisopropyltriazényl)-4-éthynylbenzène, avec un rendement de 96%.
**FB** : C₁₄H₁₉N₃ **PM** : 229g/mol
**CCM** : Rf (Hexane pur) : 0,30 ;
**RMN** ^{**1**}**H (300 MHz, CDCl**_{**3**}**)** : δ 7,46 (d, J₂₋₃ = 8,6 Hz, 2H, H₂) ; 7,37 (d, J₃₋₂ = 8,6 Hz, 2H, H₃) ; 5,33 (s1, 1H, H₈) ; 4,03 (s1, 1H, H₈) ; 3,06 (s, 1H, H₇) ; 1,29 (s1, 12H, H₉) ;
**RMN** ^{**13**}**C (75,47 MHz, CDCl**_{**3**}**)** : δ 151,75 (1C, C₁) ; 132,57 (2C, C₂) ; 119,95 (2C, C₃) ; 117,56 (1C, C₄) ; 84,14 (1C, C₅) ; 76,28 (1C, C₆) ; 48,68, 45,75 (2C, C₈) ; 23,61, 19,28 (4C, C₉) ;
**SM (70eV/DCI/NH3/intensité %)** : m/e : 230 (100, [M+1]⁺) ;

### 2-iodo-4-triméthylsilanyléthynyl-benzoate de méthyle 28 :

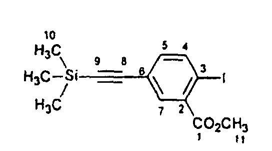

### MODE OPERATOIRE

2,6 g d'acide 2-iodo-5-((triméthylsilyl)éthynyl)benzoïque (7,56 mmol, 1 éq.) sont mis en solution dans 50 ml de THF puis 2,17 g de *N*-éthyl-*N'*-(3-diméthylaminopropyl)-carbodiimide (EDC) (11,3 mmol, 1,5 éq.) et 1,52 g d'hydroxybenzotriazole ou HOBT (11,3 mmol, 1,5 éq.) sont additionnés, enfin 18 ml de MeOH sont additionnés goutte à goutte. Après avoir agité le milieu réactionnel à température ambiante pendant 4h., celui-ci est évaporé à sec, repris avec 50 ml d'eau et 50 ml d'EtOAc. La phase organique est lavée avec 25 ml d'une solution aqueuse à 5% en KHSO₄, 25 ml d'une solution aqueuse à 5% en NaHCO₃, et 25 ml d'une solution aqueuse saturée en NaCl. Elle est ensuite séchée sur sulfate de magnésium, filtrée puis évaporée pour conduire à 2,93 g d'une huile jaune (Rdt : quantitatif) qui est utilisée sans purification supplémentaire dans les étapes ultérieures.
**FB** : C₁₃H₁₅O₂ISi **PM** : 357,9 g/mol
**CCM** : Rf (Hexane / EtOAc : 9 / 1) : 0,46 ;
**RMN** ^{**1**}**H (300 MHz, CDCl**_{**3**}**)** : δ 7,91 (d, J₄₋₆ = 8,0 Hz, 1H, H₄) ; 7,87 (d, J₇₋₆ = 2,1 Hz, 1H, H₇) ; 7,18 (dd, J₆₋₇ = 2,1 Hz, J₆₋₄ = 8,0 Hz, 1H, H₆) ; 3,91 (s, 3H, H₁₁) ; 0,23 (s, 9H, H₁₀) ;
**RMN** ^{**13**}**C (75,47 MHz, CDCl**_{**3**}**)** : δ 165,86 (1C, C₁) ; 141,05 (1C, C₄) ; 134,99 ; 133,90 (2C, C₆, C₇) ; 134,78 (1C, C₂) ; 123,10 (1C, C₅) ; 102,61 (1C, C₃) ; 96,60 (1C, C₉) ; 93,83 (1C, C₈) ; 52,31 (1C, C₁₁) ; -0,44 (3C, C₁₀) ;
**SM (70eV/DCI/NH3/intensité %)** : m/e : 376 (100, [M+18]⁺) ;

### 2-(4-triisopropyltriazènylphényléthynyl)-5-triméthylsilanyl éthynyl benzoate de méthyle 29 :

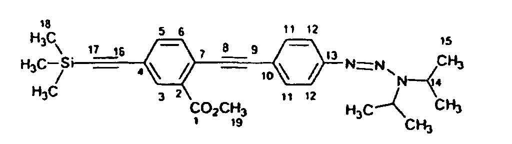

### MODE OPERATOIRE

676 mg de **27** (1,88 mmol, 1 éq.) sont mis en solution dans 7 ml de THF, puis 132 mg de Pd (0,18 mmol, 0,01 éq.) et 132 mg d'iodure de cuivre (3,76 mmol, 0,02 éq.) sont additionnés. Après agitation du milieu réactionnel pendant 15 min., 430 mg de **28** (1,88 mmol, 1 éq.) en solution dans 7 ml de THF sont additionnés goutte à goutte. L'agitation est maintenue pendant 15h., à température ambiante. Après évaporation à sec, le résidu est purifié sur gel de silice 60H (Hexane/EtOAc : 97/3) pour conduire à 683 mg d'une poudre jaune citron avec un rendement de 79%.
**FB** : C₂₇H₃₃N₃O₂Si **PM :** 459 g/mol
**CCM** : Rf (Hexane / EtOAc : 9 / 1) : 0,28 ;
**RMN** ^{**1**}**H (300 MHz, CDCl**_{**3**}**)** : δ 8,06 (s, 1H, H₃) ; 7,34-7,57 (m, 6H, H₅, H₆, H₁₁, H₁₂) ; 5,27 (s1, 1H, H₁₄) ; 3,96 (s, 4H, H₁₄, H₁₉) ; 1,31 (s1, 12H, H₁₅) ; 0,25 (s, 9H, H₁₈) ;
**RMN** ^{**13**}**C (75,47 MHz, CDCl**_{**3**}**)** : δ 165,84 (1C, C₁) ; 151,78 (1C, C₁₃) ; 134,28 ; 133,85 ; 133,45 ; 132,99 (4C, C₃, C₅, C₆) ; 132,99 (2C, C₁₁) ; 131,36 (1C, C₂) ; 123,80 ; 122,16 (2C, C₇, C₁₀) ; 102,08 (2C, C₁₂) ; 118,54 (1C, C₄) ; 103,47 (1C, C₁₇) ; 97,21, 96,83 (2C, C₈, C₉); 87,69 (1C, C₁₆) ; 52,02 (1C, C₁₉) ; 48,88, 45,97 (2C, C₁₄) ; 23,72, 19,16 (4C, C₁₅) ; -0,36 (3C, C₁₈) ;
**SM (70eV/DCI/NH3/intensité %) :** m/e : 460 (100, [M+1]^{**+**}**) ;**

### 2-(4-iodo-phényléthynyl)-5-triméthylsilanyléthynyl benzoate de méthyle :

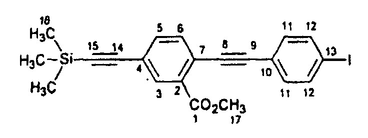

### MODE OPERATOIRE

Dans un tube scellé sont placés 2,3 g de **29** (5 mmol, 1 éq.) dans 5 ml d'iodure de méthyle (90 mmol, 18 éq.). Le milieu réactionnel est chauffé à 120°C pendant 72h., puis est évaporé à sec. Le résidu est repris dans 20 ml d'éther éthylique, filtré puis évaporé pour conduire à 2,2 g d'une huile jaune avec un rendement de 96%.
**FB** : C₂₁H₁₉O₂SiI **PM** : 458 g/mol
**CCM** : Rf (Hexane / EtOAc : 9 / 1) : 0,38 ;
**RMN** ^{**1**}**H (300 MHz, CDCl**_{**3**}**)** : δ 8,06 (s, 1H, H₃) ; 7,68 (d, J₁₁₋₁₂ = 8,0 Hz, 2H, H₁₂) ; 7,54 (s, 2H, H₃, H₅) ; 7,26 (d, J₁₁₋₁₂ = 8,0 Hz, 2H, H₁₁) ; 3,93 (s, 3H, H₁₇) ; 0,25 (s, 9H, H₁₆) ;
**RMN** ^{**13**}**C (75,47 MHz, CDCl**_{**3**}**)** : δ 165,51 (1C, C₁) ; 137,36 (2C, C₁₂) ; 134,40 ; 133,87 ; 133,59 (3C, C₃, C₅, C₆) ; 132,97 (2C, C₁₁) ; 131,54 (1C, C₂) ; 122,95 (2C, C₇, C₁₀) ; 122,38 (1C, C₄) ; 103,21 (1C, C₁₅) ; 97,35, 94,96 (2C, C₈, C₉) ; 89,19 (13C, C₁₄) ; 94,54 (1C, C₁₃) ; 52,08 (1C, C₁₇) ; -0,40 (3C, C₁₆) ;
**SM (70eV/DCI/NH3/intensité %) :** m/e : 459 (59, [M+1]⁺) ; 476 (100, [M+18]⁺)

### 5-éthynyl-2-(4-iodo-phényléthynyl)-benzoate de 2,5-dioxopyrrolidine-1-yle 30 :

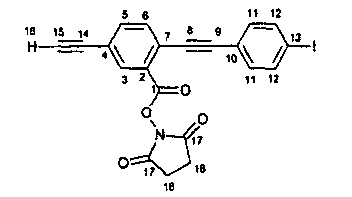

### MODE OPERATOIRE

Après un traitement basique dans le méthanol de 500 mg de 2-(4-iodo-phényléthynyl)-5-triméthylsilanyléthynyl benzoate de méthyle, 68 mg d'acide 5-éthynyl-2-(4-iodo-phényléthynyl)benzoïque (0,18 mmol, 1 éq.) sont mis en solution dans 3 ml de THF, puis 25 mg de N-hydroxysuccinimide (0,22 mmol, 1,2 éq.) et 13 mg de diméthylaminopyridine (0,10 mmol, 0,55 éq.) sont additionnés. Après avoir placé le milieu réactionnel à 0°C, 45 mg de dicyclohexylcarbodiimide (0,22 mmol, 1,2 éq.) en solution dans 1 ml de CH₂Cl₂ sont additionnés goutte à goutte. L'agitation est maintenue pendant 15 en laissant monter la température lentement. Le milieu réactionnel est ensuite filtré puis évaporé pour conduire à un résidu qui est purifié par chromatographie sur gel de silice. Le produit ainsi obtenu est lavé une fois à l'EtOAc et 50 mg d'un solide jaune pale avec un rendement de 60%.
**FB :** C₂₁H₁₂O₄NI **PM :** 469 g/mol
**CCM** : Rf(Hexane / EtOAc : 60 / 40) : 0,5 ;
**RMN** ^{**1**}**H (300 MHz, CD**_{**3**}**OD)** : δ 8,03 (s, 1H, H₃) ; 7,44-7,50 (m, 4H, H₅, H₆, H₁₂) ; 7,06 (d, J₁₁₋₁₂ = 8,2 Hz, 2H, H₁₁) ; 3,22 (s, 1H, H₁₆) ; 2,74 (s, 4H, H₁₈) **SM (70eV/DCI/NH3/intensité %) :** m/e : 470 (9,8, [M+1]⁺) ; 477 (100, [M+18]⁺)

### 2-(bis)méthoxycarbonylméthyl-amino)-6-(2-[2-(2-(2-[5-éthynyl-2-(4-iodo-phényléthynyl)-benzoylamino]-éthoxy)-éthoxy)-éthoxy]-acétylamino)-hexanoate de méthyle 31b :

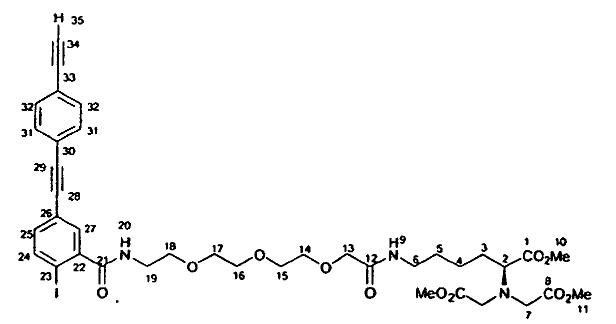

### MODE OPERATOIRE

92 mg de **30** (0,18 mmol, 1 éq.) en solution dans 3 ml de CH₂Cl₂ et 0,25 ml de triéthylamine (1,8 mmol, 10 éq.) sont additionnés goutte à goutte sur 88 mg de **21b** (0,18 mmol, 1 éq.) en solution dans 2 ml de CH₂Cl₂. Le milieu réactionnel est agité à température ambiante pendant 4h , puis est évaporé à sec. Le résidu obtenu est chromatographié sur gel de silice 60H (CH₂Cl₂/MeOH : 97/3) pour conduire à 60 mg d'une huile légèrement jaune avec un rendement de 40%.
**FB :** C₃₈H₄₆O₁₁N₃I **PM :** 847 g/mol
**CCM** : Rf (MeOH / CH₂Cl₂ : 1 / 9) : 0,47 ;
**RMN** ^{**1**}**H (300 MHz, CDCl**_{**3**}**)** : δ 8,00 (s, 1H, H₂₇) ; 7,70 (d, J₃₂₋₃₁ = 8,2 Hz, 2H, H₃₂) ; 7,50 (s1, 3H, H₂₄, H₂₅, H₂₀) ; 7,26 (d, J₃₁₋₃₂ = 8,2 Hz, 2H, H₃₁) ; 6,61 (tl, 1H, H₉) ; 3,88 (s, 2H, H₁₃) ; 3,16-3,70 (m, 25H, H₇, H₁₀, H₁₁, H₁₄, H₁₅, H₁₆, H₁₇, H₁₈, H₁₉) ; 3,16-3,25 (m, 4H, H₂, H₆, H₃₅) ; 1,41-1,69 (m, 6H, H₃, H₄, H₅) ;
**SM (70eV/DCI/NH3/intensité %)** : m/e :848 (7, [M+1]⁺) ;
**Microanalyse pour C**_{**30**}**H**_{**42**}**N**_{**3**}**O**_{**11**} **I** :
Calc. : C, 53,84 ; H, 5,46 ; N, 4,95 ; O, 20,76 ; I, 14,97
Exp. : C, 52,62 ; H, 5,84 ; N, 4,98 ;

### Exemple 4 : Fixation de protéines His-tag sur un bâton moléculaire fonctionnalisé par un complexe de nickel Ni-NTA.

La fixation de la sous-unité ABC23-(His)₆ des ARN Polymérases de levure sur le polymère P0 fonctionnalisé par des complexes de nickel-NTA a été étudiée. Une étude par chromatographie de perméation a permis de mettre en évidence la fixation spécifique de protéines "étiquetées-histidine" sur le polymère. En effet, en présence de polymère l'élution de la protéine est accélérée. Plusieurs protéines se fixent sur le polymère formant ainsi des complexes protéiques de plus hauts poids moléculaires. De plus, cette fixation est induite par une interaction entre le nickel et l'étiquette polyhistidine car la protéine ABC23 sans étiquette ne semble pas ou peu se fixer sur le polymère **P0**.

### Protocole :

**1** 5 µl d'une solution 500µM de bâton moléculaire **P0** dans du tampon Tris (10 mM, pH 8) sont additionnés soit à 5 µl d'une solution de protéine ABC23-His₆ (3,2 mg/ml dans du tampon Tris 10 mM, NaCl 150 mM), soit à 7 µl d'une solution de protéine ABC23 (2,3 mg/ml dans du tampon Tris 10 mM, NaCl 150 mM), ou bien à 5 µl de tampon Tris (10 mM, pH 8). Après 18h. sans agitation, le volume de la solution est complété à 50µl par addition de tampon Tris (10 mM, pH 8) et l'ensemble est injecté dans une boucle d'injection de 50 µl du Smart® system.

### Conditions :

Etude de la fixation de l'ABC23-(His)₆ de l'ARN Polymérase de levure sur le polymère P0 par chromatographie de perméation à l'aide d'un Smart® system (Colonne Superose 6; elution Tris(10mM, pH 8 ; NaCl 150 mM)

### Exemple 5 : Observation par microscopie électronique de protéines His-tag sur un bâton moléculaire fonctionnalisé par un complexe de nickel Ni-NTA :

La fixation d'une phosphatase-(His)₆ sur le polymère P0 fonctionnalisé par des complexes de nickel-NTA a été étudiée par chromatographie de perméation. On observe la structure des objets supramoléculaires formés par microscopie électronique. On note la formation d'agrégats linéaires de protéines.

### Conditions expérimentales :

Après purification par chromatographie de perméation sur Smart® system (Colonne Superose 6; élution Tris(10mM, pH 8 ; NaCl 150 mM), 5 µl de solution sont déposés sur une grille de microscopie électronique recouverte d'un film de carbone et préalablement déchargée sous vide avec un courant de 20 mA. La grille est alors colorée négativement avec une solution d'acétate d'uranyle et observée dans le microscope électronique.

Les photos sont enregistrées sur des films KODAK SO163 à un grossissement 45,000 x, avec un microscope électronique à transmission Philips CM 120 fonctionnant à 100kV et dans des conditions minimales du faisceau d'électron (< 10 électrons/ Å²).

## Revendications

1. Bâtons moléculaires, **caractérisés en ce qu'**ils présentent une structure représentée par la formule générale I suivante : 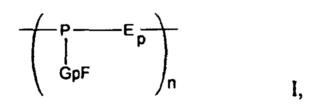 dans laquelle :
**P** représente un polymère sélectionné dans le groupe constitué par les polyphénylènes, les polyphénylènevinylènes, les polyphénylèneéthynylènes et les poly-vinylènes, tels qu'illustrés dans les formules ci-après : 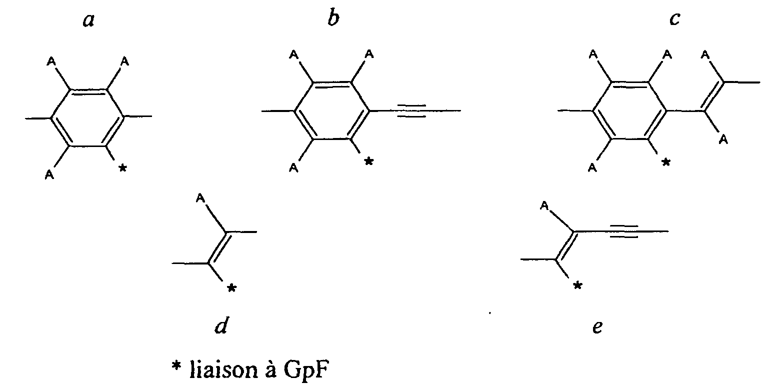
dans lesquelles :
A représente un atome hydrogène ou l'un des groupes suivants : alkyle, OH, O-alkyle, NH₂, NH-alkyle, CO₂H, CO₂-alkyle, CONH₂, CONH-alkyle,
**GpF** (groupe fonctionnel) représente un groupe B-R, dans lequel :
- B (bras de liaison) est sélectionné parmi des chaînons carbonés en C₁-C₁₀, éventuellement substitués par des groupes alkyles, présentant ou non des insaturations ou des motifs poly-oxyéthylène pouvant présenter ou non en milieu de chaîne des groupes phosphate, tels que : 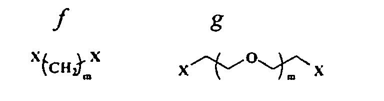 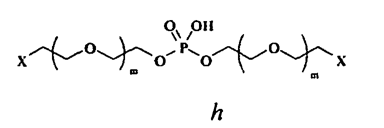
dans lesquels :
m représente un nombre entier de 1 à 10,
X représente O, NHCO, OCO, COO, CONH, S, CH₂ ou NH et constitue aux extrémités desdits chaînons carbonés des fonctions organiques d'accrochage du type esters, amides, éthers, thioéthers ;
- R représente un groupe hydrophile, sélectionné parmi les groupes chargés positivement ou négativement ; des ligands ou analogues de macromolécules biologiques choisis parmi la biotine, la novobiocine, l'acide rétinoïque, les stéroïdes, et des antigènes ; des complexes organométalliques interagissant avec des acides aminés ou des acides nucléiques et dont les ligands sont éventuellement fonctionnalisés par des groupements alkyles de liaison à E ;
**n** représente un nombre entier compris entre 5 et 1000,
**p** représente un nombre entier compris entre 0 et 10 et
**E** (segment espaceur) représente un motif chimique dont la nature ne perturbe pas la structure rigide du squelette formé par P et représente un motif phénylène, éthynylène, vinylène ou la combinaison de ces motifs, comme illustré dans la formule ci-après : 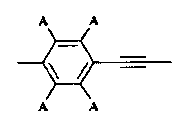 dans laquelle A représente un atome d'hydrogène ou l'un des groupes suivants : alkyle, OH, O-alkyle, NH₂, NH-alkyle, CO₂H, CO₂-alkyle, CONH₂, CONH-alkyle.

2. Bâtons moléculaires selon la revendication 1, **caractérisée en ce qu'**ils présentent la formule générale II suivante : 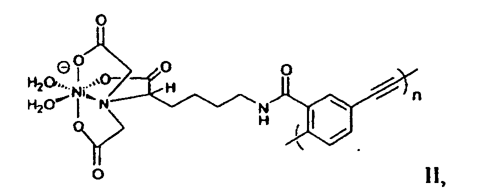 dans laquelle:
p=0 : absence de E,
P représente le groupe *b* tel que défini ci-dessus,
GpF comprend un groupe B représenté par un groupe *f* tel que défini ci-dessus, dans lequel m=3, l'un des X représente NHCO et l'autre X représente CH₂, et un groupe R représenté par un complexe organométallique à base de nickel (complexe Ni-NTA) et
n représente un nombre entier compris entre 5 et 1000.

3. Bâtons moléculaires selon la revendication 1, **caractérisés en ce qu'**ils présentent la formule générale III suivante : 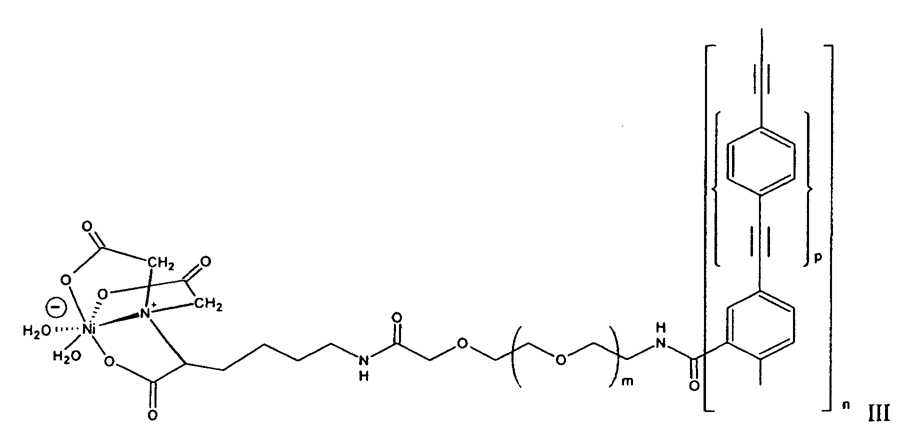 dans laquelle :
m représente un nombre entier compris entre 1 et 10,
p représente un nombre entier compris entre 0 et 10,
P représente le groupe *b* tel que défini ci-dessus,
GpF comprend un groupe B représenté par un groupe *h* tel que défini ci-dessus, dans lequel les deux X sont identiques et représentent NHCO et un groupe R représenté par un complexe organométallique à base de nickel (complexe Ni-NTA), dont le ligand NTA est fonctionnalisé par un groupe alkyle en C₄, et
n représente un nombre entier compris entre 5 et 1000.

4. Procédé de fixation et/ou d'auto-organisation de macromolécules biologiques, **caractérisé en ce qu'**il comprend essentiellement l'incubation, pendant au moins 15 minutes, d'une macromolécule biologique en solution avec un bâton moléculaire, selon l'une quelconque des revendications 1 à 3, dans des conditions de température et de pH convenables.

5. Procédé selon la revendication 4, **caractérisé en ce que** lesdites macromolécules biologiques sont notamment des protéines solubles, membranaires, trans-membranaires, des enzymes, des anticorps, des fragments d'anticorps ou des acides nucléiques.

6. Procédé selon la revendication 4 ou la revendication 5, **caractérisé en ce que** ladite solution est constituée d'un solvant de solubilisation desdites macromolécules biologiques, aqueux ou hydroalcoolique et contenant éventuellement au moins un détergent.

7. Procédé selon l'une quelconque des revendications 4 à 6, **caractérisé en ce que** les conditions d'incubation sont de préférence les suivantes : incubation à température ambiante, pendant 15 minutes à 48 heures, à un pH compris entre 5,5 et 8,5.

8. Objet supramoléculaire, **caractérisé en ce qu'**il est constitué d'un bâton moléculaire selon l'une quelconque des revendications 1 à 3, sur lequel des macromolécules biologiques sont fixées de manière non-covalente.

9. Objet supramoléculaire, **caractérisé en ce qu'**il est constitué d'un bâton moléculaire selon l'une quelconque des revendications 1 à 3, sur lequel des macromolécules biologiques sont auto-organisées sous une forme cristalline.

10. Application de l'objet supramoléculaire selon la revendication 8 ou la revendication 9, à l'étude structurale des macromolécules qui lui sont associées.

11. Application de l'objet supramoléculaire selon la revendication 8 ou la revendication 9, en tant que réactif immunologique.

12. Application de l'objet supramoléculaire selon la revendication 8 ou la revendication 9, en tant que biocapteurs ou bioconducteurs.

## Patentansprüche

1. Molekülstäbe, **dadurch gekennzeichnet, dass** sie eine Struktur aufweisen, die durch die folgende allgemeine Formel I dargestellt wird: 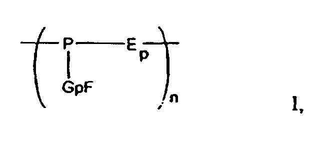 in der:
**P** ein Polymer darstellt, das aus der Gruppe, bestehend aus Polyphenylenen, Polyphenylenvinylenen, Polyphenylenethinylenen und Polyvinylenen, wie sie in den folgenden Formeln dargestellt sind, ausgewählt ist: 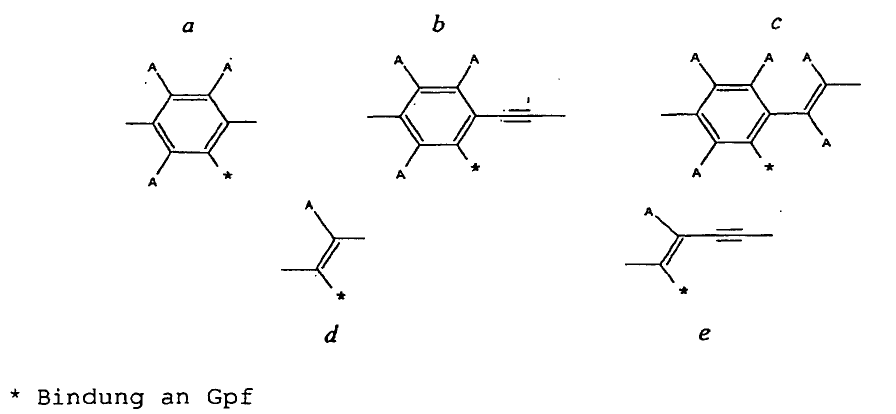
worin:
A ein Wasserstoffatom oder eine der folgenden Gruppen: Alkyl, OH, O-Alkyl, NH₂, NH-Alkyl, CO₂H, CO₂-Alkyl, CONH₂, CONH-Alkyl darstellt;
**Gpf** (funktionelle Gruppe) eine Gruppe B-R darstellt, in der:
- B (Bindungsarm) ausgewählt ist aus C₁-C₁₀-Kohlenstoffketten gegebenenfalls substituiert durch Alkylgruppen, enthaltend Unsättigungen oder nicht, oder Polyoxyethylengruppierungen, die in der Kettenmitte Phosphatgruppen aufweisen können oder nicht, wie zum Beispiel: 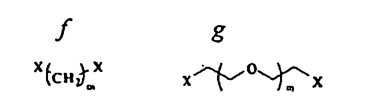 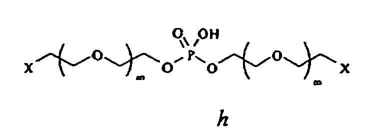
in denen:
m ein ganze Zahl zwischen 1 und 10 darstellt,
X für O, NHCO, OCO, COO, CONH, S, CH₂ oder NH steht und an den Enden der genannten Kohlenstoffketten organische Verankerungsfunktionen des Ester-, Amid-, Ether-, Thioethertyps bildet;
- R eine hydrophile Gruppe darstellt, die aus positiv oder negativ geladenen Gruppen; Liganden oder Analoga biologischer Makromoleküle, ausgewählt aus Biotin, Novobiozin, Retinoesäure, Steroiden und Antigenen; metallorganischen Komplexen, die mit Aminosäuren oder Nukleinsäuren wechselwirken und deren Liganden gegebenenfalls durch Alkylgruppierungen zur Bindung an E funktionalisiert sind, ausgewählt ist;
**n** eine ganze Zahl zwischen 5 und 1000 ist;
**p** eine ganze Zahl zwischen 0 und 10 ist und
E (Spacer) einen chemischen Rest darstellt, dessen Natur die starre Struktur des Skeletts, das durch P gebildet wird, nicht stört und einen Phenylen-, Ethinylen-, Vinylenrest oder die Kombination dieser Reste darstellt, wie es in der folgenden Formel dargestellt ist: 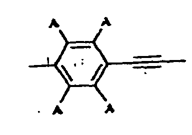
worin A ein Wasserstoffatom oder eine der folgenden Gruppen: Alkyl, OH, O-Alkyl, NH₂, NH-Alkyl, CO₂H, CO₂-Alkyl, CONH₂, CONH-Alkyl darstellt.

2. Molekülstäbe nach Anspruch 1, **dadurch gekennzeichnet, dass** sie die folgende allgemeine Formel II aufweisen: 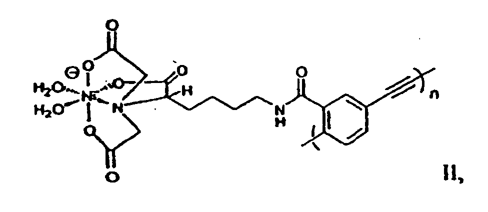 in der:
p = 0: Fehlen von E,
P die Gruppe *b*, wie sie oben definiert wurde, darstellt;
Gpf eine Gruppe B, die durch eine Gruppe *f*, wie sie oben definiert wurde, dargestellt wird, umfasst, wobei m = 3, eines der X für NHCO steht und das andere X für CH₂ steht und eine Gruppe R für einen metallorganischen Komplex auf der Basis von Nickel (Ni-NTA-Komplex) steht, und
n eine ganze Zahl zwischen 5 und 1000 darstellt.

3. Molekülstäbe nach Anspruch 1, **dadurch gekennzeichnet, dass** sie die folgende allgemeine Formel III aufweisen: 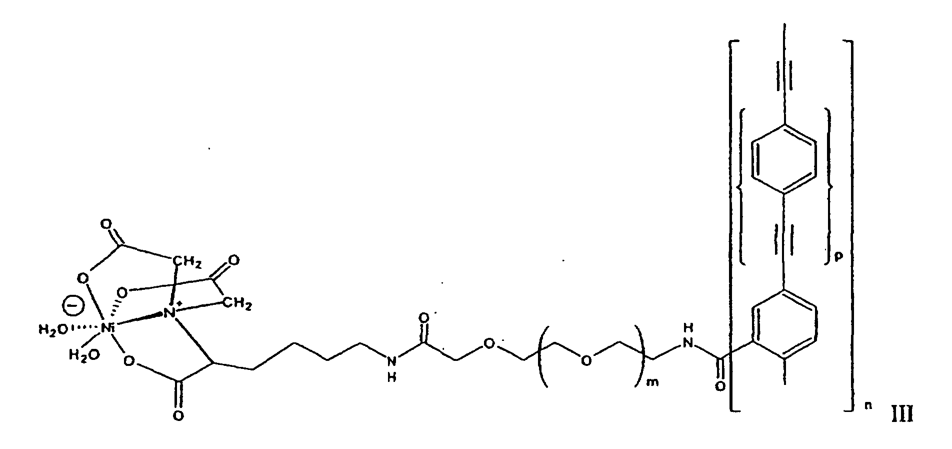 in der:
m eine ganze Zahl zwischen 1 und 10 darstellt,
p eine ganze Zahl zwischen 0 und 10 darstellt,
P die Gruppe *b*, wie sie oben definiert ist, darstellt,
Gpf eine Gruppe B, die durch eine Gruppe *h*, wie sie oben definiert ist, dargestellt wird, umfasst, wobei die zwei X identisch sind und für NHCO stehen und eine Gruppe R für einen metallorganischen Komplex auf der Basis von Nickel (Ni-NTA-Komplex) steht, dessen Ligand NTA durch eine C₄-Alkylgruppe funktionalisiert ist, und
n eine ganze Zahl zwischen 5 und 1000 darstellt.

4. Verfahren zur Fixierung und/oder Selbstorganisation von biologischen Makromolekülen, **dadurch gekennzeichnet, dass** es im Wesentlichen die Inkubation eines biologischen Makromoleküls in Lösung mit einem Molekülstab nach einem der Ansprüche 1 bis 3 während 15 Minuten unter zweckdienlichen Temperatur- und pH-Bedingungen umfasst.

5. Verfahren nach Anspruch 4, **dadurch gekennzeichnet, dass** die biologischen Makromoleküle insbesondere lösliche, Membran-, Transmembran-Proteine, Enzyme, Antikörper, Antikörperfragmente oder Nukleinsäuren sind.

6. Verfahren nach Anspruch 4 oder Anspruch 5, **dadurch gekennzeichnet, dass** die Lösung durch ein Lösungsmittel zur Solubilisierung der biologischen Makromoleküle, das wässrig oder wässrig-alkoholisch ist und gegebenenfalls mindestens ein Detergenz enthält, gebildet wird.

7. Verfahren nach einem der Ansprüche 4 bis 6, **dadurch gekennzeichnet, dass** die Inkubationsbedingungen vorzugsweise die folgenden sind: Inkubation bei Umgebungstemperatur für 15 Minuten bis 48 Stunden bei einem pH zwischen 5,5 und 8,5.

8. Supramolekulares Objekt, **dadurch gekennzeichnet, dass** es aus einem Molekülstab nach einem der Ansprüche 1 bis 3 besteht, auf dem biologische Makromoleküle in nicht kovalenter Art fixiert sind.

9. Supramolekulares Objekt, **dadurch gekennzeichnet, dass** es aus einem Molekülstab nach einem der Ansprüche 1 bis 3 besteht, auf dem biologische Makromoleküle in kristalliner Form selbstorganisiert sind.

10. Anwendung des supramolekularen Objekts nach Anspruch 8 oder Anspruch 9 zur Strukturuntersuchung der Makromoleküle, die mit ihm assoziiert sind.

11. Anwendung des supramolekularen Objekts nach Anspruch 8 oder Anspruch 9 als immunologisches Reagenz.

12. Anwendung des supramolekularen Objekts nach Anspruch 8 oder Anspruch 9 als Biosensoren oder Bioleiter.

## Claims

1. Molecular rods, **characterized in that** they have a structure represented by the following general formula I: 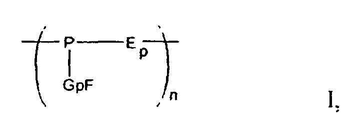 in which:
**P** is a polymer selected from the group consisting in polyphenylenes, polyphenylenevinylenes, polyphenyleneethynylenes and polyvinylenes, as illustrated by the formulae below: 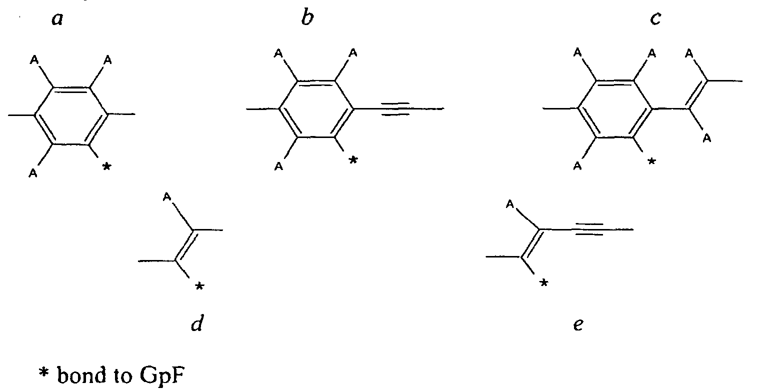
in which:
A is a hydrogen atom or one of the following groups: alkyl, OH, O-alkyl, NH₂, NH-alkyl, CO₂H, CO₂-alkyl, CONH₂, CONH-alkyl;
**GpF** (functional group) is a group B-R, in which:
- B (bonding arm) is selected from C₁-C₁₀ carbon chains which are optionally substituted by alkyl groups, may or may not have unsaturations or polyoxyethylene moieties which may or may not have phosphate groups in the middie of the chain, such as: 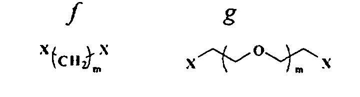 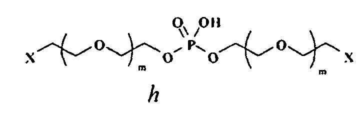
in which:
m is an integer from 1 to 10,
X is O, NHCO, OCO, COO, CONH, S, CH₂ or NH and constitutes, at the ends of said carbon chains, organic coupling groups of the ester, amide, ether or thioether type;
- R is a hydrophilic group selected from positively or negatively charged groups; ligands or analogues of biological macromolecules selected from biotin, novobiocin, retinoic acid, steroids and antigens; organometallic complexes interacting with amino acids or nucleic acids and whose ligands are optionally functionalized by alkyl groups for bonding to E;
**n** is an integer between 5 and 1000;
**p** is an integer between 0 and 10; and
**E** (spacer segment) is a chemical moiety whose nature does not disturb the rigid structure of the skeleton formed by P, and is a phenylene, ethynylene or vinylene moiety or a combination of these moieties, as illustrated by the formula below: 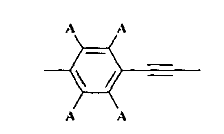
in which A is a hydrogen atom or one of the following groups: alkyl, OH, O-alkyl, NH₂, NH-alkyl, CO₂H, CO₂-alkyl, CONH₂, CONH-alkyl.

2. Molecular rods according to Claim 1, **characterized in that** they have the following general formula II: 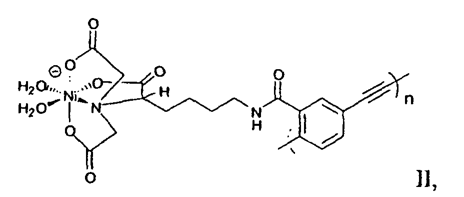 in which:
p = 0: absence of E;
P is the group *b* as defined above;
GpF comprises a group B represented by a group *f* as defined above in which m = 3, one of the groups X is NHCO and the other X is CH₂, and a group R represented by a nickel-based organometallic complex (Ni-NTA complex); and
n is an integer between 5 and 1000.

3. Molecular rods according to Claim 1, **characterized in that** they have the following general formula III: 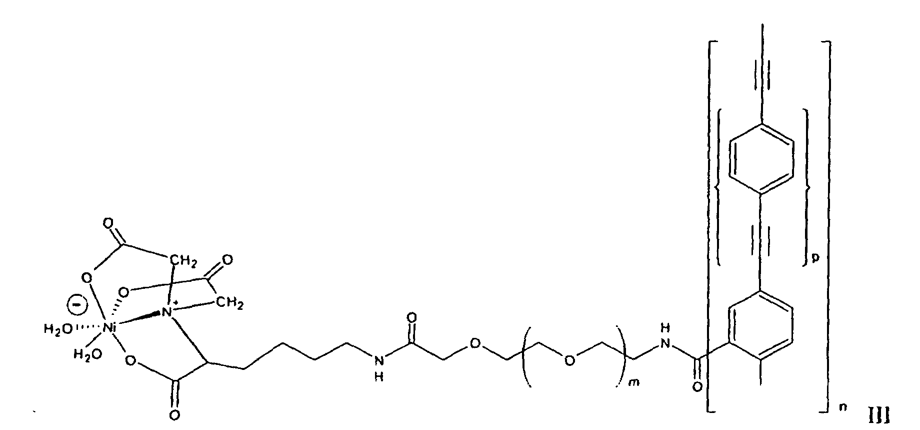 in which:
m is an integer between 1 and 10;
p is an integer between 0 and 10;
P is the group *b* as defined above;
GpF comprises a group B represented by a group *h* as defined above in which the two X are identical and are NHCO, and a group R represented by a nickel-based organometallic complex (Ni-NTA complex) in which the ligand NTA is functionalized by a C₄ alkyl group; and
n is an integer between 5 and 1000.

4. Method for the attachment and/or auto-organization of biological macromolecules, **characterized in that** it comprises essentially the incubation of a biological macromolecule in solution with a molecular rod, according to any one of Claims 1 to 3, for at least 15 minutes under suitable temperature and pH conditions.

5. Method according to Claim 4, **characterized in that** said biological macromolecules are especially soluble, membrane or trans-membrane proteins, enzymes, antibodies, antibody fragments or nucleic acids.

6. Method according to Claim 4 or Claim 5, **characterized in that** said solution is constituted of an aqueous or hydroalcoholic solvent for solubilizing said biological macromolecules, optionally containing at least one detergent.

7. Method according to any one of Claims 4 to 6, **characterized in that** the incubation conditions are preferably as follows: incubation at room temperature for 15 minutes to 48 hours at a pH of between 5.5 and 8.5.

8. Supramolecular object, **characterized in that** it is constituted of a molecular rod, according to any one of Claims 1 to 3, on which biological macromolecules are attached in a non-covalent manner.

9. Supramolecular object, **characterized in that** it is constituted of a molecular rod, according to any one of Claims 1 to 3, on which biological macromolecules are auto-organized in a crystalline form.

10. Application of the supramolecular object according to Claim 8 or Claim 9 to the structural study of the macromolecules associated therewith.

11. Application of the supramolecular object according to Claim 8 or Claim 9 as an immunological reagent.

12. Application of the supramolecular object according to Claim 8 or Claim 9 as a biosensor or bioconductor.
